# NOUVEAU FASCICULE DE BREVET EUROPEEN

(11) **EP 1 758 049 B2**
(45) Date de publication et mention de la décision concernant l'opposition: **21.02.2018**
(45) Mention de la délivrance du brevet: 22.10.2014
(21) Numéro de dépôt: 06015879.7
(22) Date de dépôt: 31.07.2006
(51) Int. Cl.: G06K 19/07, G06K 7/00

(54) **Lecteur à couplage inductif comprenant des moyens d'extraction d'une tension d'alimentation électrique**
Induktiver Kopplungsleser mit Energieextraktionsmitteln
Inductive coupling reader comprising means for extracting power

(30) Priorité: 23.08.2005 FR 0508694
(43) Date de publication de la demande: 28.02.2007
(73) Titulaire: Inside Secure, 13590 Meyreuil (FR)
(72) Inventeur: Charrat, Bruno, 13090 Aix en Provence (FR); Martin, Michel, 13840 Rognes (FR); Carron, Olivier, 13360 Roquevaire (FR)
(74) Mandataire: Marchand, André

(56) Documents cités:
- EP-A1- 1 026 832
- EP-A1- 1 786 116
- EP-A2- 1 560 149
- WO-A-2005/057481
- WO-A1-2004/098089
- WO-A1-2005/008575
- WO-A1-2006/109032
- DE-T2- 3 854 129
- DE-T2- 60 103 079
- DE-T2-602004 012 490
- GB-A- 2 406 023
- US-A1- 2002 097 144
- US-A1- 2003 141 989
- US-B2- 6 466 126
- US-B2- 7 255 274
- KORIES R. ET AL: 'Taschenbuch der Elektrotechnik', vol. AUFL.'93, 1993, VERLAG HARRI DEUTSCH, FRANKFURT AM MAIN pages 143-145 - 161-163
- Priodoc. GB0507285.5
- Priodoc. GB0516517.0
- Priodoc. JP2004-255183

## Description

La présente invention concerne un lecteur à couplage inductif prévu pour lire des circuits intégrés sans contact de type PICC (Proximity Inductive Coupling Circuit). Dans l'état de la technique, un tel lecteur revêt diverses désignations, notamment "PCD" (Proximity Coupling Device) selon la norme ISO/IEC 14443, "VCD" (Vicinity Coupling Device) selon la norme ISO/IEC 15693, "coupleur inductif" dans les documentations techniques, etc..

La présente invention concerne plus particulièrement un lecteur capable d'échanger des données avec un autre lecteur, en sus d'un échange de données avec un circuit intégré sans contact.

Les procédés de transmission de données entre lecteurs à couplage inductif suscitent aujourd'hui un grand intérêt en ce qu'ils offrent diverses perspectives d'application et peuvent concurrencer ou compléter les procédés de transmission de données sans fil classiques comme Bluetooth^{®}.

Baptisés "NFC" (Near Field Communication) par la communauté industrielle, un forum industriel leur est consacré (www.nfc-forum.org/home).

Les lecteurs à couplage inductif embarqués dans les téléphones mobiles ou les PDA (assistants numériques personnels) sont particulièrement concernés par les procédés NFC, pour permettre le transfert de données entre deux téléphones mobiles, entre un téléphone mobile et un PDA ou vice-versa, ou entre un téléphone ou un PDA et un lecteur relié à un ordinateur personnel via une interface USB.

Toutefois, dans de telles applications, l'utilisation de lecteurs à faible consommation électrique est essentielle car un lecteur embarqué utilise l'énergie fournie par la batterie du téléphone mobile ou du PDA et celle-ci doit être préservée au maximum.

Le brevet européen EP 1 327 222 au nom de la demanderesse décrit un procédé de transmission de données entre deux lecteurs dans lequel l'un des deux lecteurs est dans un mode passif et consomme peu d'énergie électrique. Ce procédé, baptisé eNFC ("enhanced NFC), permet de transférer des données entre un lecteur en mode passif et un lecteur en mode actif ou vice-versa. Le lecteur en mode actif émet un champ magnétique oscillant à une fréquence de travail F0, par exemple 13,56 MHz, tandis que le lecteur en mode passif n'émet pas, en principe, de champ magnétique (sauf exception décrite plus loin, où des salves d'un signal de porteuse sont émises).

Le document WO 2005/057481 décrit des dispositifs RFID passifs et actifs pouvant être intégrés dans le même appareil.

Le document GB 2 406 023 décrit un dispositif RFID à deux modes de fonctionnement.

Le document WO 2004/098089 décrit deux dispositifs sans contact pouvant avoir des rôles interchangeables.

Le document US200210097144 décrit un dispositif portatif passif de type carte à puce sans contact, équipé d'une antenne et d'un redresseur pour fournir une tension d'alimentation auxiliaire à partir du champ émis par un lecteur.

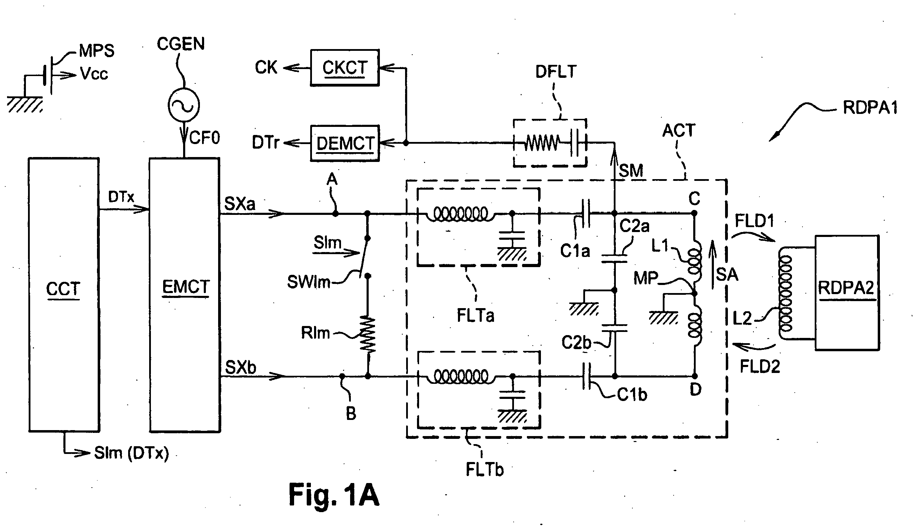

Une architecture classique de lecteur RDPA1 à deux modes de fonctionnement, actif et passif, est représentée sur la figure 1A. Le lecteur RDPA1 comprend les éléments suivants :
- un circuit de contrôle CCT,
- un circuit d'antenne ACT comprenant deux bornes d'entrée A, B, des condensateurs C1a, C1b, C2a, C2b et une bobine d'antenne L1 ayant deux bornes C, D,
- deux filtres passe-bas FLTa, FLTb de type EMC (EMC=compatibilité électromagnétique) incorporés dans le circuit d'antenne ACT,
- un circuit émetteur EMCT relié aux bornes A, B du circuit d'antenne,
- un circuit de démodulation DEMCT et un circuit d'extraction d'horloge CKCT reliés au circuit d'antenne par l'intermédiaire d'un filtre DFLT passe-bande, et
- un circuit de simulation de modulation de charge relié aux bornes A, B du circuit d'antenne ACT, comprenant un interrupteur SW1m en série avec une résistance de charge Rlm,
- un oscillateur CGEN fournissant au circuit EMCT un signal de porteuse CF0 ou "porteuse" CF0, de fréquence F0 (fréquence de travail du lecteur, généralement 13,56 MHz), et
- une source d'alimentation principale MPS fournissant une tension Vcc assurant l'alimentation électrique des divers organes du lecteur, par exemple une batterie ou un transformateur connecté au réseau électrique.

Le circuit d'antenne ACT est de type symétrique et présente la structure suivante :
- la bobine d'antenne L1 a un point milieu MP relié à la masse,
- une borne du condensateur C1a est connectée à la borne C de la bobine d'antenne L1 et l'autre borne du condensateur est reliée à la borne A du circuit d'antenne via le filtre FLTa,
- une borne du condensateur C1b est connectée à la borne D de la bobine d'antenne L1 et l'autre borne du condensateur est reliée à la borne B du circuit d'antenne via le filtre FLTb,
- une borne du condensateur C2a est connectée à la borne C de la bobine d'antenne L1 et l'autre borne du condensateur est reliée à la masse du lecteur,
- une borne du condensateur C2b est connectée à la borne D de la bobine d'antenne L1 et l'autre borne du condensateur est reliée à la masse.

Le passage du mode de fone tAPctionnement actif au mode de fonctionnement passif, ou vice-versa, est contrôlé par le circuit CCT, par exemple au moyen d'un drapeau présent dans un registre d'état (non représenté). On rappellera brièvement les caractéristiques de ces deux modes de fonctionnement, qui comprennent chacun des phases d'émission de données et des phases de réception de données.

### Mode de fonctionnement actif

Le circuit CCT active l'oscillateur CGEN et le circuit émetteur EMCT. Le circuit EMCT applique au circuit d'antenne ACT un signal de contrôle SX comprenant la porteuse CFO fournie par l'oscillateur CGEN. Le signal SX est scindé ici en deux composantes SXa, SXb en opposition de phase en raison de la structure symétrique du circuit d'antenne. Un signal d'antenne alternatif SA apparaît aux bornes de la bobine d'antenne L1 et celle-ci émet un champ magnétique FLD1 oscillant à la fréquence F0.

### Emission de données en mode actif

L'émission de données en mode actif permet au lecteur RDPA1 d'envoyer des données DTx à un circuit intégré sans contact passif ou à un lecteur RDPA2 (représenté sur la figure 1A) se trouvant dans le mode passif. A cet effet, le circuit CCT applique les données DTx au circuit EMCT et celui-ci module l'amplitude du signal SX en fonction de ces données. La modulation d'amplitude se communique au signal d'antenne SA et au champ magnétique émis FLD1 et est détectée par le lecteur RDPA2.

### Réception de données en mode actif

La réception de données en mode actif permet au lecteur RDPA1 de recevoir des données DTr envoyées par modulation de charge par un circuit intégré sans contact ou par le lecteur RDPA2 en mode passif. A cet effet, le lecteur RDPA2 module l'impédance de son circuit d'antenne pour simuler une modulation de charge qui serait faite par un circuit intégré sans contact. La modulation de charge se répercute sur le circuit d'antenne ACT du lecteur RDPA1 et un signal de modulation de charge SM apparaît dans la bobine d'antenne L1, sous la forme d'une modulation de l'enveloppe du signal d'antenne SA. Le signal SM est extrait du signal d'antenne SA par le filtre passe-bande DFLT et est démodulé par le circuit DEMCT, qui fournit au circuit CCT les données reçues DTr.

### Mode de fonctionnement passif

Le circuit CCT désactive le circuit émetteur EMCT ainsi que l'oscillateur CGEN. Le lecteur RDPA2 est placé dans le mode actif de sorte que la bobine d'antenne L2 de ce lecteur émet un champ magnétique FLD2. Le champ magnétique FLD2 fait apparaître un signal d'antenne SA dans la bobine d'antenne L1 du lecteur RDPA1. Ce signal d'antenne est désigné dans un souci de simplicité par la même référence que le signal d'antenne du mode actif, bien qu'il apparaisse ici par couplage inductif entre les bobines d'antenne L1 et L2. Le signal d'horloge CK du lecteur est extrait du signal d'antenne SA par le circuit CKCT (mode fonctionnement dit "totalement passif") ou est fourni par un oscillateur autonome (non représenté) alimenté par une source de tension locale (mode de fonctionnement dit "passif").

### Réception de données en mode passif

La réception de données en mode passif permet au lecteur RDPA1 de recevoir des données DTr que le lecteur RDPA2 envoie par modulation de l'amplitude du champ magnétique FLD2. Cette modulation d'amplitude forme, comme dans le cas d'une réception de données en mode actif, un signal SM de modulation de l'enveloppe du signal d'antenne SA. Le signal SM est extrait du signal d'antenne SA par le circuit DEMCT, celui-ci permettant d'extraire aussi bien le signal de modulation de charge SM reçu en mode actif que le signal de modulation d'amplitude SM reçu en mode passif, l'extraction consistant dans les deux cas en une démodulation de l'enveloppe du signal d'antenne.

### Emission de données en mode passif

L'émission de données en mode passif permet au lecteur RDPA1 d'envoyer des données DTx au lecteur RDPA2. A cet effet, le circuit CCT applique à l'interrupteur SWlm un signal de contrôle de modulation de charge Slm qui comprend les données DTx. Pour simuler une modulation de charge qui serait faite par un circuit intégré sans contact, le signal Slm est modulé selon les normes applicables aux circuits intégrés sans contact, par exemple avec une sous-porteuse dont la fréquence est un sous-multiple de la fréquence de travail F0 (typiquement 847 KHz ou 424 KHz). La sous-porteuse est fournie par des circuits diviseurs de fréquence prévus dans le circuit CCT, à partir du signal d'horloge CK.

Un tel lecteur à couplage inductif présente l'avantage de pouvoir échanger des données avec d'autres lecteurs en mode passif, sans émettre de champ magnétique et par conséquent en consommant peu d'énergie.

Ainsi, bien que le lecteur RDPA1 doive impérativement être placé dans le mode actif lorsqu'il échange des données avec un circuit intégré sans contact (par exemple lors de la lecture d'une carte de visite électronique), il est de préférence placé dans le mode passif lorsqu'il doit transférer des données au lecteur RDPA2 si l'énergie électrique dont ce dernier dispose n'est pas limitée (par exemple lorsque le lecteur RDPA2 est un lecteur relié à un ordinateur de bureau et est alimenté électriquement par celui-ci), le lecteur RDPA2 étant alors placé dans le mode actif.

La consommation électrique d'un tel lecteur en mode passif, bien que faible, limite néanmoins la durée d'utilisation d'une batterie de téléphone mobile ou de PDA.

Pour pallier cet inconvénient, la présente invention prévoit un lecteur qui est capable, en mode de fonctionnement passif, de réceptionner par couplage inductif une partie de l'énergie émise par le lecteur en mode actif avec lequel il échange des données.

Une bobine dédiée à la réception d'énergie peut être prévue à cet effet. Toutefois, l'ajout d'une bobine d'antenne dédiée dans un lecteur est une solution coûteuse et son incorporation dans un téléphone mobile ou un PDA entraîne divers problèmes techniques.

Ainsi, la présente invention propose d'extraire de l'énergie électrique directement dans le circuit d'antenne du lecteur, sans utiliser une bobine d'antenne dédiée.

Plus particulièrement, l'invention prévoit un procédé selon la revendication 1.

Selon la revendication 2, la tension alternative est prélevée sur au moins une borne de la bobine d'antenne.

Selon la revendication 3, la tension alternative est redressée sans écrêtage de la tension alternative induite.

Selon la revendication 4, la tension alternative est prélevée sur l'une des bornes d'extrémité de la bobine.

Selon la revendication 5, la tension alternative est prélevée sur une borne de la bobine d'antenne ne se trouvant pas à l'extrémité de la bobine et formant un point diviseur de la tension alternative induite.

Selon la revendication 6, la tension d'alimentation auxiliaire est fournie pendant une phase de réception de données du lecteur en mode de fonctionnement passif.

Selon la revendication 7, la tension d'alimentation auxiliaire est également fournie pendant une phase d'émission de données du lecteur en mode de fonctionnement passif.

Selon la revendication 8, le procédé est appliqué à un lecteur comprenant une ligne d'alimentation électrique interne reliée à une source d'alimentation principale, fournissant une tension d'alimentation principale, et comprend l'injection de la tension d'alimentation auxiliaire dans la ligne d'alimentation interne et le blocage de la tension d'alimentation principale lorsque la tension d'alimentation auxiliaire est injectée dans la ligne d'alimentation interne.

Selon la revendication 9, le potentiel électrique par défaut du signal de contrôle est le potentiel haute impédance, ou le potentiel 0, correspondant au potentiel de masse du lecteur.

Selon la revendication 10, le procédé comprend une étape consistant à faire basculer le signal de contrôle dans un second potentiel électrique en sus du potentiel électrique par défaut, afin de provoquer une modification de l'impédance du circuit d'antenne, provoquer une modulation de charge dans la bobine d'antenne d'un autre lecteur et émettre des données en mode passif au moyen du circuit d'antenne.

Selon la revendication 11, le signal de contrôle en mode passif présente l'une des combinaisons d'états suivantes : 1) par défaut, le potentiel 0, et le potentiel haute impédance pour simuler une modulation de charge ; 2) par défaut, le potentiel haute impédance, et le potentiel 0 pour simuler une modulation de charge ; 3) par défaut, le potentiel 0, et une tension continue pour simuler une modulation de charge ; 4) par défaut, le potentiel haute impédance, et une tension continue pour simuler une modulation de charge ; 5) par défaut, le potentiel 0, et un signal électrique oscillant pour simuler une modulation de charge ; 6) par défaut le potentiel haute impédance et un signal électrique oscillant pour simuler une modulation de charge.

L'invention concerne également un lecteur à couplage inductif selon la revendication 12.

Selon la revendication 13, le circuit d'alimentation auxiliaire est relié à au moins une borne de la bobine d'antenne.

Selon la revendication 14, le circuit d'alimentation auxiliaire comprend un étage d'entrée sans diode d'écrêtage de la tension alternative induite.

Selon la revendication 15, le circuit d'alimentation auxiliaire est connecté à l'une des bornes d'extrémité de la bobine.

Selon la revendication 16, le circuit d'alimentation auxiliaire est connecté à une borne de la bobine ne se trouvant pas à l'extrémité de la bobine et formant un point diviseur de la tension alternative induite.

Selon la revendication 17, le circuit d'alimentation auxiliaire comprend au moins une diode de redressement de la tension alternative et un condensateur de filtrage passe-bas de la tension redressée.

Selon la revendication 18, le circuit d'alimentation auxiliaire fournit la tension d'alimentation auxiliaire pendant une phase de réception de données en mode de fonctionnement passif.

Selon la revendication 19, le circuit d'alimentation auxiliaire fournit également la tension d'alimentation auxiliaire pendant une phase d'émission de données en mode de fonctionnement passif.

Selon la revendication 20, le lecteur comprend une ligne d'alimentation électrique interne reliée d'une part à une source d'alimentation principale et d'autre part au circuit d'alimentation auxiliaire.

Selon la revendication 21, la ligne d'alimentation interne est reliée à la source d'alimentation principale et au circuit d'alimentation auxiliaire par l'intermédiaire d'un circuit qui bloque une tension issue de la source d'alimentation principale lorsque la tension d'alimentation auxiliaire est présente.

Selon la revendication 22, le potentiel électrique par défaut du signal de contrôle est le potentiel haute impédance ou le potentiel 0, correspondant au potentiel de masse du lecteur.

Selon la revendication 23, le lecteur comprend un circuit pour porter le signal de contrôle dans un second potentiel électrique en sus du potentiel électrique par défaut, afin de provoquer une modification de l'impédance du circuit d'antenne à la fréquence de travail et d'envoyer des données en mode de fonctionnement passif.

Selon la revendication 24, le signal de contrôle en mode passif présente l'une des combinaisons d'états suivantes : 1) par défaut, le potentiel 0, et le potentiel haute impédance pour simuler une modulation de charge ; 2) par défaut, le potentiel haute impédance, et le potentiel 0 pour simuler une modulation de charge ; 3) par défaut, le potentiel 0, et une tension continue pour simuler une modulation de charge ; 4) par défaut, le potentiel haute impédance, et une tension continue pour simuler une modulation de charge ; 5) par défaut, le potentiel 0, et un signal électrique oscillant pour simuler une modulation de charge ; 6) par défaut le potentiel haute impédance et un signal électrique oscillant pour simuler une modulation de charge.

Selon la revendication 25, le circuit émetteur fournit le signal de contrôle appliqué à la borne d'entrée du circuit d'antenne dans le mode de fonctionnement passif.

Selon la revendication 26, le signal de contrôle est porté au second potentiel électrique par le circuit émetteur.

L'invention concerne également un appareil électronique portable selon la revendication 27.

Selon la revendication 28, le lecteur dans le mode de fonctionnement actif est alimenté par la batterie du dispositif portable, et est auto-alimenté par le circuit d'alimentation auxiliaire dans le mode de fonctionnement passif.

Ces objets, caractéristiques et avantages ainsi que d'autres de la présente invention seront exposés plus en détail dans la description suivante du procédé selon l'invention et d'un exemple de réalisation d'un lecteur à couplage inductif selon l'invention, faite à titre non limitatif en relation avec les figures jointes parmi lesquelles :
- a figure 1A représente l'architecture d'un lecteur à couplage inductif classique,
- la figure 1B représente le lecteur de la figure 1A équipé d'un moyen de réception d'énergie électrique par couplage inductif,
- les figures 2A, 2B, 2C illustrent un procédé selon l'invention permettant à un lecteur de recevoir de l'énergie électrique par couplage inductif tout en recevant ou en envoyant des données, le procédé étant appliqué ici à un circuit d'antenne symétrique,
- les figures 3A, 3B sont des schémas équivalents du circuit d'antenne dans des configurations illustrées sur les figures 2A à 2C,
- la figure 4 illustre le même procédé appliqué à un circuit d'antenne non symétrique,
- les figures 5A, 5B, 5C représentent divers modes de réalisation d'un circuit d'alimentation auxiliaire selon l'invention,
- la figure 6 représente l'architecture générale d'un lecteur à couplage inductif selon l'invention,
- la figure 7 représente la structure d'un port d'un circuit émetteur présent dans le lecteur de la figure 6,
- les figures 8A, 8B, 8C représentent des signaux apparaissant dans le lecteur de la figure 6 lorsque celui-ci envoie des données en mode passif, et
- les figures 9A, 9B, 9C représentent des signaux apparaissant dans un lecteur en mode actif relié au lecteur de la figure 6 par couplage inductif.

Selon un premier aspect de l'invention, une énergie électrique est extraite directement dans le circuit d'antenne d'un lecteur à couplage inductif, sans équiper le lecteur d'une bobine supplémentaire.

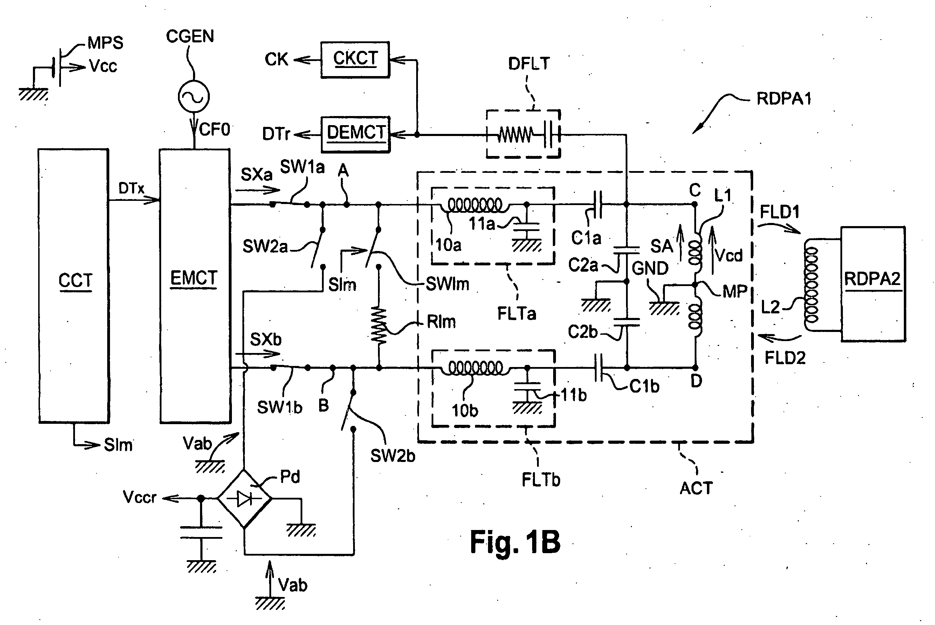

La figure 1B illustre la mise en oeuvre de cet aspect de l'invention dans le lecteur RDPA1 décrit plus haut en relation avec la figure 1A. La structure générale du lecteur RDPA1 est inchangée, les mêmes éléments étant désignés par les mêmes références.

Le circuit d'antenne ACT comprend, entre ses bornes d'entrée A, B, la bobine L1 dont le point milieu MP est relié à la masse GND, les condensateurs C1a, C1b, C2a, C2b et les filtres FLTa, FLTb. Le filtre FLTa comprend par exemple une bobine 10a connectée entre la borne A et le condensateur C1a, et un condensateur 11a connecté entre le condensateur C1a et la masse. Le filtre FLTb est identique au filtre FLTa et comprend une bobine 10b connectée entre la borne B et le condensateur C1b, et un condensateur 11b connecté entre le condensateur C1b et la masse.

Le circuit d'antenne ACT est de façon classique un circuit résonnant calé sensiblement sur la fréquence de travail F0, "sensiblement" signifiant à quelques centaines de KHz près, par exemple avec un décalage de l'ordre de 0 à Fsc relativement à la fréquence F0, Fsc étant la fréquence d'une sous-porteuse utilisée pour la modulation de charge, par exemple 847 KHz. La prévision d'un tel décalage relève du savoir-faire de l'homme de l'art et vise seulement à optimiser la réception de la sous-porteuse en mode actif.

Selon l'invention, les éléments suivants sont ajoutés au lecteur RDPA1 :
- deux interrupteurs SW1a, SW1b entre les sorties du circuit émetteur EMCT et les bornes A, B du circuit d'antenne,
- un pont redresseur Pd à diodes comprenant en sortie un condensateur de lissage Cs, et
- deux interrupteurs SW2a, SW2b reliant les entrées du pont redresseur aux bornes A, B du circuit d'antenne.

Ainsi, lorsque le lecteur RDPA1 est dans le mode de fonctionnement actif, le circuit de contrôle CCT ferme les interrupteurs SW1a, SW1b et ouvre les interrupteurs SW2a, SW2b. Le circuit EMCT est relié aux bornes A, B du circuit d'antenne ACT et applique à celui-ci le signal de contrôle SX comprenant la porteuse CF0 de fréquence F0, et scindé en deux composantes SXa, SXb.

Dans le mode de fonctionnement passif, le circuit CCT désactive le circuit EMCT et l'oscillateur CGEN, ouvre les interrupteurs SW1a, SW1b et ferme les interrupteurs SW2a, SW2b. Ainsi, le redresseur Pd est connecté aux bornes A, B du circuit d'antenne. En présence d'un champ magnétique FLD2 émis par un autre lecteur RDPA2, le redresseur Pd reçoit une tension alternative Vab qui est fonction, d'une part, de la tension Vcd du signal d'antenne SA induit dans la bobine L1, soit la tension apparaissant entre la borne C de la bobine L1 et le point milieu MP (cette tension apparaissant également entre la borne D de la bobine et le point milieu MP) et, d'autre part, de l'impédance du circuit d'antenne vue depuis les bornes A, B. Le redresseur Pd fournit alors une tension d'alimentation auxiliaire Vccr, par redressement de la tension Vab.

Le signal d'horloge CK du lecteur est extrait du signal d'antenne SA par le circuit CKCT ou est fourni par un oscillateur autonome (non représenté) qui peut éventuellement être alimenté par la tension Vccr.

Bien que répondant en principe au but visé par l'invention, ce mode de réception d'énergie électrique par couplage inductif présente un inconvénient. En effet, le circuit d'antenne ACT est généralement prévu pour présenter un facteur de qualité élevé et une faible impédance à la fréquence de travail F0, généralement quelques dizaines d'ohms seulement, afin que le champ magnétique FLD1 émis en mode actif soit d'une amplitude maximale en réponse au signal de contrôle SX fourni par le circuit EMCT. Or, cette faible valeur de l'impédance du circuit d'antenne est contraire à une bonne réception de l'énergie électrique, qui est en partie consommée dans le circuit d'antenne, de sorte que le courant pouvant être fourni par le circuit d'alimentation auxiliaire est faible.

Dans ces conditions, la tension auxiliaire Vccr ne peut servir à alimenter directement le lecteur RDPA1. Elle permet seulement de recharger partiellement la source d'alimentation principale MPS si celle-ci est une batterie, ou à charger lentement une batterie de secours.

L'homme de l'art comprendra qu'il n'est pas envisageable de résoudre cet inconvénient en conférant au circuit d'antenne une impédance élevée à la fréquence de travail F0, car la fonction première du lecteur est de lire des circuits intégrés sans contact passifs et l'optimisation de son fonctionnement en mode actif doit être privilégiée.

Ainsi, la présente invention vise également un procédé permettant d'extraire de l'énergie électrique du circuit d'antenne avec un bon rendement sans qu'il soit nécessaire de modifier l'impédance du circuit d'antenne à la fréquence de travail.

A cet effet, la présente invention se base tout d'abord sur un enseignement divulgué par le brevet européen EP 1 327 222 (précité), selon lequel un lecteur en mode passif peut envoyer des données à un autre lecteur en appliquant un signal de contrôle à deux états aux bornes d'entrée A, B de son circuit d'antenne. Un tel signal à deux états permet de simuler une modulation de charge qui serait faite par un circuit intégré sans contact. Selon le brevet EP 1 327 222, les états pouvant être appliqués aux bornes A, B du circuit d'antenne sont par exemple les suivants :
- 0 (masse du lecteur),
- HZ (haute impédance),
- "1" soit une tension continue Vcc, ou
- une salve de la porteuse CFO.

L'invention se fonde ensuite sur la constatation que certains de ces états, notamment les potentiels électriques 0 et HZ, provoquent un accroissement de l'impédance du circuit d'antenne en certains points du circuit d'antenne, notamment sur les bornes C, D de la bobine d'antenne.

Ainsi, comme une impédance plus élevée est gage d'une meilleure réception de l'énergie électrique par couplage inductif, la présente invention prévoit :
1) d'appliquer l'un des ces états ou potentiels électriques aux bornes A, B du circuit d'antenne, et
2) de produire la tension d'alimentation auxiliaire Vccr à partir d'une tension alternative prélevée en un point de plus haute impédance du circuit d'antenne, de préférence à partir de la tension Vcd prélevée sur les bornes C et/ou D de la bobine d'antenne L1, au lieu de produire la tension Vccr à partir de la tension Vab présente sur les bornes A, B du circuit d'antenne.

Le procédé selon l'invention comprend ainsi les opérations suivantes :
- lorsque le lecteur RD1 est en mode passif et est en phase d'attente de données ou en phase de réception de données, appliquer sur les bornes A, B du circuit d'antenne l'état par défaut qui est défini comme étant le potentiel électrique le plus favorable à une bonne réception de l'énergie, par exemple le potentiel 0 ou HZ,
- lorsque le lecteur est en phase d'émission de données en mode passif, passer de l'état par défaut à un autre état afin de simuler une modulation de charge.

L'état permettant de simuler une modulation de charge est de préférence le potentiel électrique HZ si le potentiel électrique 0 est l'état par défaut ou le potentiel électrique 0 si le potentiel électrique HZ est l'état par défaut.

L'état "1" ou potentiel électrique Vcc peut également être utilisé pour simuler une modulation de charge, en combinaison avec l'état par défaut 0 ou HZ, en prévoyant des impulsions de tension Vcc de courte durée. Ainsi, si la simulation de modulation de charge est cadencée par une sous-porteuse de 847 KHz, la durée des impulsions de simulation de modulation de charge est égale à R*1/847*10³ ms, R étant le rapport cyclique des impulsions, soit 0,59 ms si les impulsions présentent un rapport cyclique égal à 0,5, et 0,3 ms si ces impulsions présentent un rapport cyclique égal à 0,25.

Egalement, l'invention n'exclut pas l'utilisation de l'état appelé "salves de porteuse" pour simuler une modulation de charge, en combinaison avec le potentiel 0 ou HZ en tant qu'état par défaut, à la condition d'équiper le lecteur d'un condensateur de lissage de forte valeur capable de suppléer à une altération dans la réception de l'énergie pendant les périodes où des salves de porteuse sont émises (ce point sera discuté plus loin).

En résumé, les combinaisons d'états envisageables sont les suivantes (le premier état désigné dans chaque combinaison étant l'état par défaut) :
- combinaison 1 : {0, HZ},
- combinaison 2 : {HZ, 0},
- combinaison 3 : {0, 1},
- combinaison 4 : {Hz, 1},
- combinaison 5 : {0, "salves de la porteuse CF0"},
- combinaison 6 : {HZ, "salves de la porteuse CF0"}

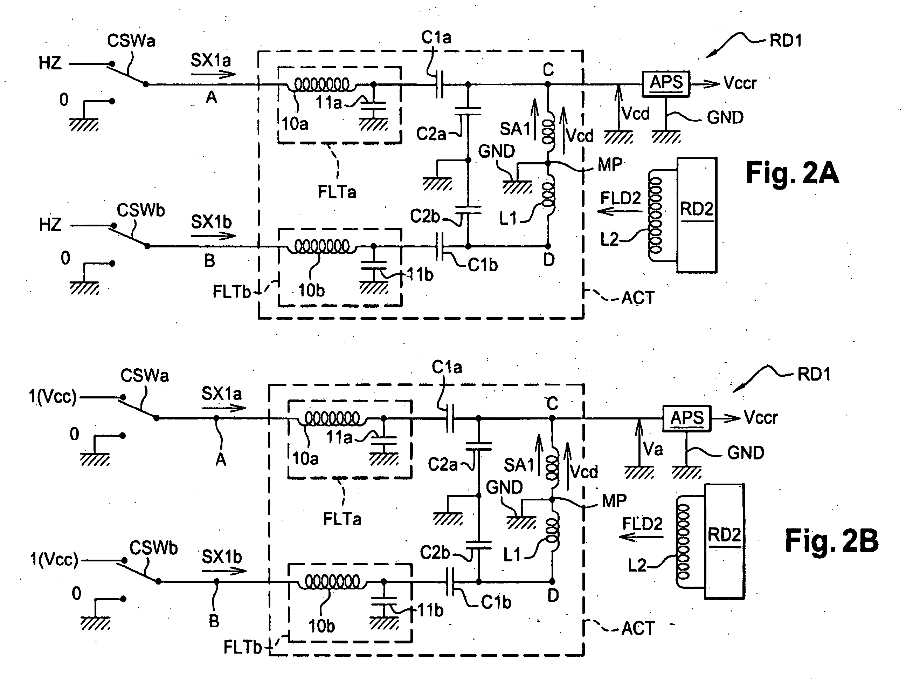

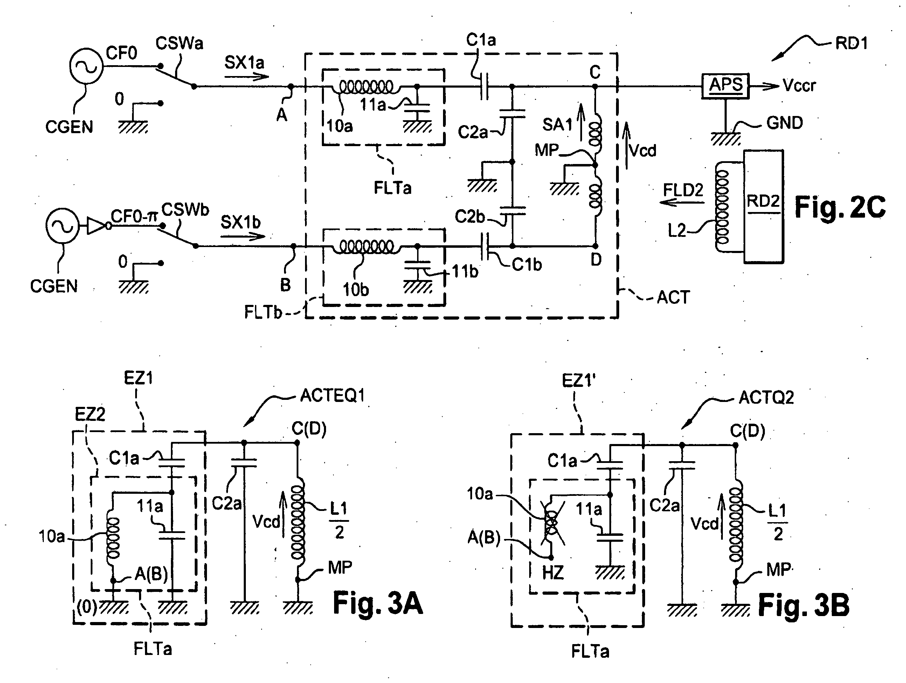

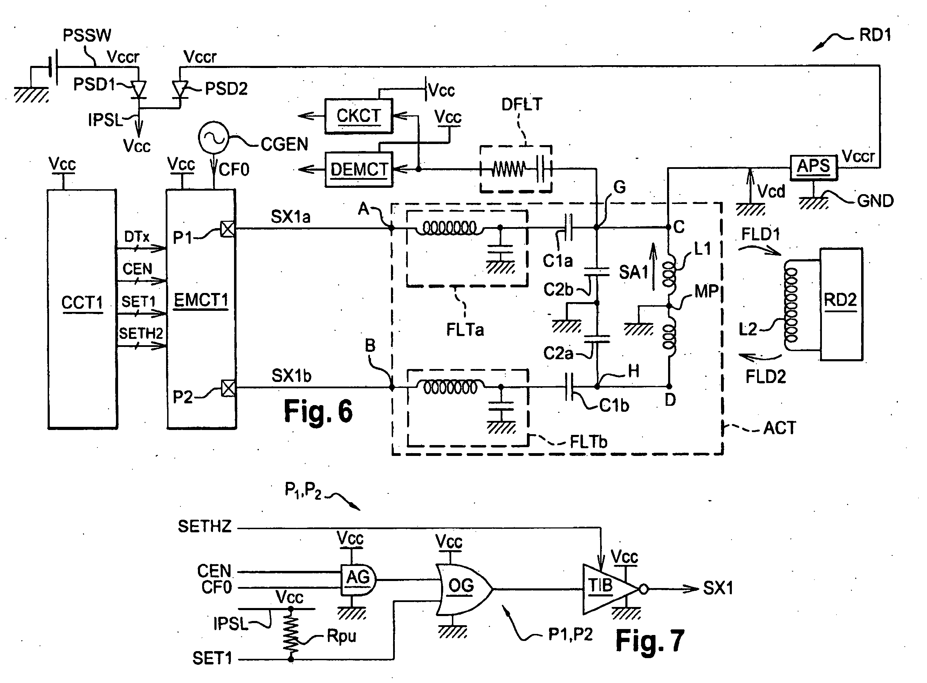

Les figures 2A, 2B, 2C illustrent la mise en oeuvre des combinaisons 1, 3 et 5, respectivement. Ces figures représentent le circuit d'antenne ACT déjà décrit et un circuit d'alimentation auxiliaire APS selon l'invention. On suppose ici que le circuit d'antenne ACT et le circuit d'alimentation auxiliaire APS sont des éléments d'un lecteur RD1 alimenté par la tension Vcc, dont les autres éléments ne sont pas représentés et seront décrits plus loin en relation avec la figure 6.

Le circuit d'alimentation auxiliaire APS comprend une première entrée connectée à l'une des bornes C, D de la bobine d'antenne L1, ici la borne C, et une seconde entrée connectée à la masse GND. Les bornes A, B du circuit d'antenne reçoivent un signal de contrôle SX1 selon l'invention, qui comprend ici deux composantes SX1a, SX1b. Le basculement des composantes SX1a, SX1b d'un état à l'autre est schématisé par deux interrupteurs CSWa, CSWb ayant chacun une sortie et deux entrées : les première et seconde entrées de chaque interrupteur CSWa, CSWb reçoivent l'un des deux états ou potentiels électriques du signal de contrôle SX1, tandis que la sortie de l'interrupteur CSWa est connectée à la borne A du circuit d'antenne et la sortie de l'interrupteur CSWb est connectée à la borne B du circuit d'antenne ACT.

En présence d'un champ magnétique externe FLD2 émis par la bobine d'antenne L2 d'un lecteur RD2, un signal d'antenne alternatif SA1 de tension Vcd apparaît dans la bobine L1 par couplage inductif, entre la borne C de la bobine d'antenne L1 et le point milieu MP ou masse GND (ainsi qu'entre la borne D et le point milieu). Ainsi, l'entrée du circuit APS reçoit la tension Vcd et fournit la tension d'alimentation auxiliaire Vccr par redressement de la tension Vcd.

Dans l'exemple de réalisation illustré sur la figure 2A, la première entrée de chaque interrupteur CSWa, CSWb reçoit le potentiel 0 (entrées connectées à la masse) et la seconde entrée de chaque interrupteur CSWa, CSWb reçoit le potentiel HZ (entrées en circuit ouvert), de sorte que le signal de contrôle SX1 passe du potentiel électrique par défaut 0 au potentiel électrique HZ lorsqu'une impulsion de simulation de modulation de charge doit être émise à l'attention du lecteur RD2.

Lorsque le signal SX1 est à 0 (SX1a=SX1b=0) les bornes A et B sont connectées à la masse. Le schéma équivalent ACTEQ1 du circuit d'antenne dans cette configuration est représenté sur la figure 3A. Ce schéma équivalent est le schéma du demi-circuit d'antenne non symétrique comprenant seulement la moitié de la bobine d'antenne L1 (désignée "L1/2", soit la partie de la bobine s'étendant entre le noeud C et le point milieu MP), les condensateurs C1a, C2a, et le filtre FLTa comprenant la bobine 10a et le condensateur 11a.

Lorsque le signal SX1 est dans l'état HZ (SX1a=SX1b=HZ) les bornes A et B sont en circuit ouvert. Le schéma équivalent ACTEQ2 du circuit d'antenne est représenté sur la figure 3B. Comme le précédent, ce schéma équivalent est le schéma du demi-circuit d'antenne non symétrique équivalent.

Comme cela apparaîtra clairement à l'homme de l'art, le circuit d'antenne dans l'une ou l'autre des configurations ACTEQ1 ou ACTEQ2 présente à la fréquence de travail F0 une impédance supérieure à celle que présente le même circuit d'antenne vu depuis les bornes A ou B. En effet, le circuit d'antenne vu depuis les bornes A ou B est un circuit LC série/parallèle alors que le circuit d'antenne vu depuis la borne C ou D est un circuit LC parallèle dans les configurations ACTEQ1, ACTEQ2. Plus particulièrement :
1) dans la configuration ACTEQ1 la bobine L1 est en parallèle avec le condensateur C2a et est également en parallèle avec une impédance EZ1. Cette impédance EZ1 est formée par le condensateur C1a en série avec une impédance EZ2. L'impédance EZ2 est formée par le condensateur 11a du filtre FLTa en parallèle avec la bobine 10a du filtre FLTa (car l'extrémité de la bobine 10a est connectée à la borne A du circuit d'antenne, qui est connectée à la masse).
2) dans la configuration ACTEQ2, la bobine L1 est en parallèle avec le condensateur C2a et avec une impédance EZ1'. Cette impédance EZ1' est formée par le condensateur C1a en série avec le condensateur 11a du filtre FLTa (l'extrémité de la bobine 10a connectée à la borne A étant en circuit ouvert, la bobine 10a n'est pas prise en compte).

Parmi ces deux configurations, celle qui présente l'impédance la plus élevée dépend des valeurs données aux composants L1, C1a, C1b, C2a, C2b, 10a, 11a, 10b, 11b. Ces valeurs peuvent être choisies au moment de la conception du circuit d'antenne grâce à des outils logiciels de calcul et de simulation, pour déterminer à l'avance la configuration qui présente l'impédance la plus élevée. Toutefois, parmi un ensemble de valeurs possibles des valeurs des composants L1, C1a, C1b, C2a, C2b, FLTa, FLTb, il apparaît que la configuration ACTEQ1 présente généralement une impédance plus élevée que la configuration ACTEQ2, de sorte que, contre toute attente, l'état 0 est l'état par défaut préféré du signal de contrôle SX1 en mode passif.

Ces observations s'appliquent également à l'exemple de réalisation illustré sur la figure 2B, où l'état par défaut du signal SX1 est le potentiel 0 et l'état permettant de simuler une modulation de charge est la tension continue Vcc. Ainsi, la réception de l'énergie électrique est optimale lorsque le lecteur reçoit ou est en attente de recevoir des données. Lorsque la tension continue Vcc est appliquée au circuit d'antenne, cette tension se superpose à la tension alternative induite Vcd mais n'empêche pas la réception de l'énergie électrique.

Dans l'exemple de réalisation illustré sur la figure 2C, les interrupteurs CSWa, CSWb reçoivent sur leur première entrée le potentiel 0 (potentiel par défaut) et reçoivent sur leur seconde entrée la porteuse CF0, celle-ci étant appliquée à l'interrupteur CSWa sans déphasage et à l'interrupteur CSWb avec un déphasage de 180° (F0-π) pour que les signaux SX1a, SX1b ne se s'annulent pas mutuellement. La simulation de modulation de charge étant généralement faite avec la sous-porteuse Fsc dont la fréquence est un sous-multiple de la porteuse F0, chaque salve de la porteuse CFO formant une impulsion de modulation de charge est de plus longue durée que la période de la porteuse (1/F0) et comprend ainsi plusieurs oscillations de la porteuse CFO. Par exemple, une porteuse de fréquence F0=13,56 MHz présente une période de 0,0737 ms alors qu'une salve de porteuse F0 présente une durée de 0,59 ms ou de 0,3 ms conformément au calcul effectué plus haut concernant la durée des impulsions de modulation de charge.

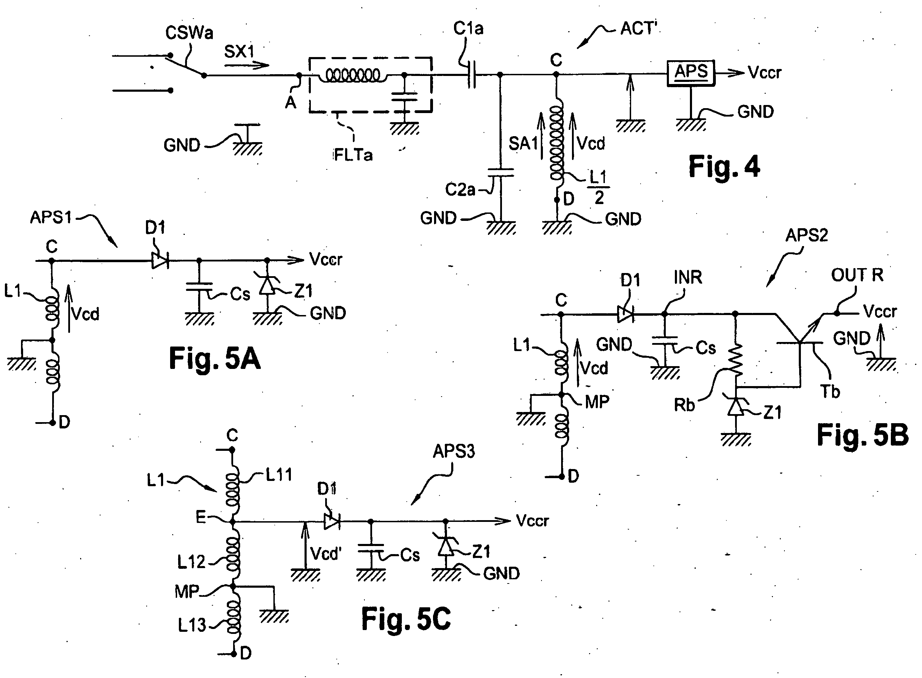

Le procédé de l'invention est également applicable à un circuit d'antenne non symétrique sans point milieu tel que le circuit d'antenne ACT' représenté sur la figure 4. Le circuit d'antenne ACT' est équivalent à un demi-circuit d'antenne symétrique ACT et ne comprend que la borne d'entrée A, le filtre FLTa, les condensateurs C1a, C2a et la demi-bobine d'antenne L1/2 dont la borne D est connectée à la masse GND. Le condensateur C1a a une borne connectée à la borne C de la bobine d'antenne L1/2 et une borne connectée à la borne A du circuit d'antenne via le filtre FLTa. Le condensateur C2a a une borne connectée à la borne C de la bobine d'antenne et une borne connectée à la masse GND. Le signal SX1, ici non symétrique, est appliqué à la borne A par l'interrupteur CSWa qui reçoit sur ses entrées l'une des combinaisons d'états {0, HZ} {HZ, 0}, {0, 1}, {HZ, 1}, {0, "salves de la porteuse CF0"} ou {HZ, "salves de la porteuse CF0"}. Le circuit d'antenne ACT' est équivalent au circuit d'antenne symétrique ACT et son schéma équivalent lorsque le signal de contrôle est dans l'état 0 ou HZ est également illustré par les figures 3A, 3B. La tension alternative Vcd apparaît ici entre les bornes C et D de la bobine d'antenne L1/2.

Les figures 5A, 5B et 5C représentent des exemples de réalisation APS1, APS2 et APS3 du circuit d'alimentation auxiliaire APS.

Le circuit APS1 représenté sur la figure 5A comprend une diode D1 à jonction PN dont l'anode (borne d'entrée du courant dans le sens passant de la diode) est reliée à la borne C de la bobine d'antenne et reçoit la tension Vcd. La cathode de la diode D1 fournit la tension auxiliaire Vccr (tension redressée) et est reliée à la masse par l'intermédiaire d'un condensateur de lissage Cs et d'une diode Zener Z1 montée en inverse et en parallèle avec le condensateur Cs. La diode Z1 assure la stabilisation de la tension Vccr au voisinage de sa tension de claquage inverse, par exemple 5V.

Dans la revendication non représenté sur les figures, le circuit APS est relié à la bobine d'antenne L1 par l'intermédiaire d'un interrupteur d'isolement, par exemple un relais de type NF (normalement fermé) qui est ouvert lorsque le lecteur est dans le mode actif afin de déconnecter le circuit APS de la bobine d'antenne L1.

Dans le circuit APS2 représenté sur la figure 5B, la cathode de la diode D1, au lieu de fournir la tension Vccr, est connectée à l'entrée INR d'un étage régulateur de tension comprenant la diode Z1, une résistance Rb et un transistor bipolaire Tb. L'entrée INR est reliée à l'anode de la résistance Rb et au collecteur du transistor Tb. La cathode de la résistance Rb est reliée à la base du transistor Tb et est également reliée à la masse par l'intermédiaire de la diode Z1 montée en inverse. Le collecteur du transistor Tb forme la sortie OUTR de l'étage régulateur et fournit la tension Vccr.

Dans les applications où la tension Vcd présente de grandes variations d'amplitude en fonction de la distance de communication, il sera avantageux d'utiliser un circuit APS ayant un étage d'entrée n'écrêtant pas la tension Vcd. On utilisera par exemple un régulateur sans diode d'écrêtage disponible dans le commerce sous la référence 7805, qui fournit la tension Vccr quelle que soit la valeur crête de la tension Vcd.

Le circuit APS3 représenté sur la figure 5C est identique au circuit APS1 de la figure 5A mais l'anode de la diode D1 est connectée à une borne intermédiaire E de la bobine d'antenne L1, formant un noeud diviseur de la tension Vcd qui est agencé entre la borne C et le point milieu MP de la bobine L1. A cet effet, la bobine d'antenne L1 comprend par exemple trois bobines L11, L12 et L13 en série, le noeud E étant le point de connexion des bobines L11 et L12, le point milieu MP de la bobine étant le point de connexion des bobines L12 et L13. Les bobines L11, L12 peuvent présenter différentes impédances selon le taux de division de la tension Vcd souhaité. La somme des impédances des bobines L11 à L13 est égale à l'impédance souhaitée pour la bobine d'antenne L1. En supposant que l'impédance de la bobine L11 soit égale à celle de la bobine L12 et égale à la moitié de l'impédance de la bobine L13, le noeud E fournit une tension Vcd' égale à Vcd/2.

La figure 6 est une vue d'ensemble du lecteur RD1 selon l'invention et représente également le lecteur RD2 avec lequel le lecteur RD1 est susceptible d'échanger des données. Le lecteur RD1 comprend :
- un circuit de contrôle CCT1, par exemple un microprocesseur ou microcontrôleur équipé de circuits périphériques et notamment d'une mémoire programme et d'une mémoire de données (non représentées),
- le circuit d'antenne ACT déjà décrit,
- un circuit de démodulation DEMCT classique et un circuit d'extraction d'horloge CKCT classique reliés au circuit d'antenne par l'intermédiaire d'un filtre DFLT passe-bande, les références déjà utilisées pour désigner ces éléments étant conservées,
- un circuit émetteur EMCT1 selon l'invention, comprenant des ports P1 et P2 reliés respectivement aux bornes A et B du circuit d'antenne ACT,
- un oscillateur CGEN fournissant au circuit EMCT1 la porteuse CFO de fréquence F0,
- une source d'alimentation principale MPS, par exemple une batterie, fournissant une tension d'alimentation externe Vcce, et
- le circuit d'alimentation auxiliaire APS déjà décrit, connecté à la borne C de la bobine d'antenne L1 et fournissant la tension d'alimentation auxiliaire Vccr.

Selon un aspect de l'invention, la tension d'alimentation externe Vcce et la tension d'alimentation auxiliaire Vccr sont envoyées dans une ligne d'alimentation commune IPSL qui fournit la tension Vcc alimentant l'ensemble des éléments du lecteur RD1. Plus particulièrement, la tension Vcce est appliquée à la ligne IPSL par l'intermédiaire d'une diode PSD1 polarisée dans le sens passant et la tension Vccr est appliquée à la ligne IPSL par l'intermédiaire d'une diode PSD2 polarisée dans le sens passant. En mode passif, lorsque le champ magnétique FLD1 généré par le lecteur RD2 fait apparaître la tension Vccr et que celle-ci devient supérieure à la tension Vcce, la diode PSD1 se bloque et le lecteur est alimenté par la tension Vccr (Vcc=Vccr). En mode actif, le lecteur est alimenté par la tension Vcce (Vcc=Vcce).

Selon un autre aspect de l'invention, le circuit émetteur EMCT1 fournit le signal de contrôle SX1 aussi bien dans le mode actif que dans le mode passif, par l'intermédiaire des ports P1, P2. Ceux-ci sont ainsi connectés directement aux bornes A, B du circuit d'antenne, sans qu'aucun interrupteur du type représenté sur les figures 2A à 2C ne soit nécessaire.

Ainsi, lorsque le lecteur RD1 est dans le mode actif, le signal SX1 (comprenant ici deux composantes symétriques SX1a, SX1b) est un signal d'excitation comprenant la porteuse CF0 et qui est modulé en amplitude lorsque des données DTx doivent être émises.

Lorsque le lecteur RD1 est dans le mode passif, le signal SX1 présente un état par défaut et un état permettant de simuler une modulation de charge. Comme décrit plus haut, l'état par défaut est de préférence le potentiel 0 ou le potentiel HZ, et l'état pour la simulation de modulation de charge est à choisir parmi les états 0, 1 (Vcc), HZ et "salves de porteuse".

La figure 7 représente un exemple de réalisation des ports P1, P2 du circuit émetteur EMCT1. Le port P1, P2 représenté reçoit la porteuse CF0 avec ou sans déphasage (selon le port considéré) et est piloté par une combinaison de signaux de contrôle SETHZ ("Set High-Z"), CEN ("Carrier Enable"), SET1 ("Set to 1"). Le port P1, P2 représenté comprend une porte AG de type ET à deux entrées, une porte OG de type OU à deux entrées et un tampon inverseur à trois états TIB ("Tri-state Inverting Buffer"). La porte AG reçoit la porteuse CFO et le signal CEN. La porte OG reçoit le signal de sortie de la porte AG et le signal SET1. Le signal de sortie de la porte OG est appliqué au tampon TIB qui reçoit sur une entrée de contrôle le signal SETHZ, la sortie du tampon TIB fournissant le signal de contrôle SX1 (ou l'une des composantes SX1a, SX1b).

Le tableau 1 ci-après décrit les combinaisons de signaux de contrôle que le circuit CCT1 peut appliquer au circuit EMCT1 lorsque le lecteur RD1 est dans le mode actif, pour que le circuit EMCT1 fournisse la porteuse (SX1=F0) ou l'état 0 (masse), cet état correspondant à une modulation à 100% de l'amplitude du signal d'antenne SA1 (émission de données en mode actif).

Il sera noté ici qu'une modulation d'amplitude inférieure à 100%, par exemple une modulation d'amplitude à 10% telle que prévue par la norme ISO 14443/B, peut également être obtenue en appliquant l'enseignement décrit par le brevet EP 1163718. Dans ce cas, plusieurs ports du type représenté sur la figure 7, par exemple six ports, sont prévus. Trois ports sont connectés en parallèle à la borne A du circuit d'antenne et trois autres ports sont connectés en parallèle à la borne B du circuit d'antenne. Les ports sont pilotés individuellement par des combinaisons de signaux de contrôle différentes. Pour moduler l'amplitude du signal d'antenne SA1 avec une amplitude de modulation inférieure à 100%, certains ports sont portés dans l'état HZ tandis que d'autres fournissent la porteuse CFO.

Le tableau 2 ci-après décrit les combinaisons de signaux de contrôle que le circuit CCT1 peut appliquer au circuit EMCT1 lorsque le lecteur RD1 est dans le mode passif, pour appliquer l'un des états 0, 1 (Vcc), HZ ou "salves de la porteuse C0".

Sauf lorsque l'état "salves de porteuse" est utilisé pour simuler une modulation de charge, l'oscillateur CGEN est en principe mis hors tension afin de limiter la consommation électrique du lecteur.

| **Tableau 1 Signaux de contrôle du circuit EMCT1 (mode actif)** | | | | | |
|---|---|---|---|---|---|
| **N°** | **F0** | **CEN** | **SET1** | **SETHZ** | **SX1** |
| 1 | F0 | 0 | 0 | 0 | 0 |
| 2 | F0 | 0 | 0 | 1 | HZ |
| 3 | F0 | 0 | 1 | 0 | 1 |
| 4 | F0 | 0 | 1 | 1 | HZ (redondant avec 2) |
| 5 | F0 | 1 | 0 | 0 | F0 |
| 6 | F0 | 1 | 0 | 1 | HZ (redondant avec 2 et 4) |
| 7 | F0 | 1 | 1 | 0 | (non utilisé) |
| 8 | F0 | 1 | 1 | 1 | (non utilisé) |

| **Tableau 2 Signaux de contrôle du circuit EMCT1 (mode passif)** | | | | | |
|---|---|---|---|---|---|
| **N°** | **F0** | **CEN** | **SET1** | **SETHZ** | **SX1** |
| 1 | - | 0 | 0 | 0 | 0 |
| 2 | - | 0 | 0 | 1 | HZ |
| 3 | - | 0 | 1 | 0 | 1 |
| 4 | - | 0 | 1 | 1 | HZ (redondant avec 2) |
| 5 | - | 1 | 0 | 0 | (non utilisé) |
| 6 | - | 1 | 0 | 1 | (non utilisé) |
| 7 | - | 1 | 1 | 0 | (non utilisé) |
| 8 | - | 1 | 1 | 1 | (non utilisé) |

Selon encore un autre aspect de l'invention, l'entrée de la porte OG recevant le signal SET1 (fig. 7) est reliée à la ligne IPSL via une résistance de polarisation à l'état haut Rpu ("pull-up"). Ainsi, si le lecteur RD1 est mis hors tension en ouvrant un interrupteur PSSW agencé entre la source MPS et la ligne d'alimentation interne IPSL (fig. 6), le lecteur peut néanmoins s'activer automatiquement en présence du champ magnétique FLD2 émis par l'autre lecteur RD2. Dans ce cas, la tension Vcc = Vccr apparaît sur la ligne IPSL et la sortie de la porte OG est forcée à 1. Par conséquent, le signal SX1 à la sortie du tampon passe par défaut à 0, de sorte que le circuit d'antenne ACT se trouve dans la configuration favorisant le plus la réception de l'énergie électrique par couplage inductif, jusqu'à ce que le circuit de contrôle CCT1, après avoir exécuté des phases d'initialisation, prenne le contrôle des ports P1, P2. A noter qu'une mesure similaire peut être prévue pour forcer le signal SETHZ à 1, si l'état par défaut favorisant le plus la réception de l'énergie est l'état HZ.

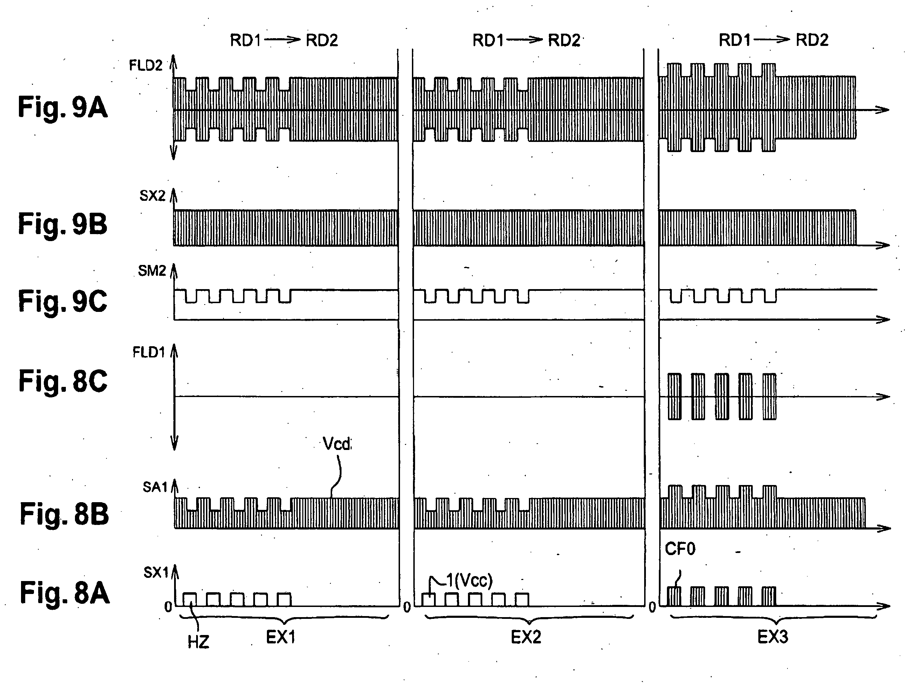

A titre d'illustration de tout ce qui vient d'être décrit, les figures 8A, 8B, 8C, 9A, 9B, 9C représentent des signaux apparaissant dans le lecteur RD1 et dans le lecteur RD2 lorsque le lecteur RD1 en mode passif envoie des données au lecteur RD2 en mode actif. Ces figures sont divisées en trois parties EX1, EX2, EX3 illustrant chacune un exemple de transmission de données en mode passif suivant l'une des six combinaisons d'états décrites plus haut.

La figure 8A représente le signal de contrôle SX1 appliqué au circuit d'antenne ACT du lecteur RD1. La figure 8B représente le signal d'antenne SA1 du lecteur RD1. La figure 8C représente le champ magnétique FLD1 émis par le lecteur RD1. La figure 9A représente le champ magnétique FLD2 émis par le lecteur RD2. La figure 9B représente un signal de contrôle SX2 que le lecteur RD2 applique à son circuit d'antenne (bien que n'étant pas détaillé en figure 6, la structure du lecteur RD2 est considérée ici comme identique à celle du lecteur RD1). La figure 9C représente le signal de modulation de charge SM2 que le lecteur RD2 extrait de son circuit d'antenne.

Dans l'exemple "EX1" l'état par défaut du signal SX1 est 0 et l'état du signal SX1 pour la simulation de modulation de charge est HZ. Dans l'exemple "EX2" l'état par défaut du signal SX1 est 0, l'état du signal SX1 pour la simulation de modulation de charge est 1 (Vcc). Dans l'exemple EX3, l'état par défaut du signal SX1 est 0, l'état du signal SX1 pour la simulation de modulation de charge est l'état "salves de la porteuse CFO".

Il apparaît sur ces figures que le signal d'excitation SX2 appliqué au circuit d'antenne du lecteur RD2 oscille à la fréquence de travail F0 mais présente une amplitude constante (fig. 9B) car le lecteur RD2 n'envoie pas de données. Toutefois le signal SX1 que le lecteur RD1 applique à son circuit d'antenne (fig. 8A) présente des changements d'états (simulation d'une modulation de charge) qui provoquent une modulation de l'enveloppe du champ magnétique FLD2 émis par le lecteur RD2 (fig. 9A). Cette modulation d'enveloppe est détectée par le lecteur RD2 car elle forme le signal de modulation SM2 (fig. 9C) que le lecteur RD2 extrait de son circuit d'antenne pour en déduire les données que le lecteur RD1 lui envoie. Par ailleurs, le signal d'antenne SA1 du lecteur RD1 (fig. 8B) recopie par couplage inductif le champ magnétique FLD2, ce qui permet au lecteur RD1 de recevoir la tension d'alimentation auxiliaire Vccr. Le signal d'antenne SA1 est, comme le champ magnétique FLD2, modulé par les changements d'état du signal SX1. Toutefois, l'amplitude du signal SA1 (qui forme la tension Vcd à partir de laquelle la tension Vccr est produite) n'est que faiblement affectée par les changements d'états du signal SX1 de sorte que la fourniture de la tension Vccr n'est pas interrompue pendant les périodes de simulation de modulation de charge. L'exemple 3 (partie EX3 des figures) où le lecteur envoie des salves de la porteuse CF0, constitue le seul cas où le champ magnétique FLD1 émis par le lecteur RD1 n'est pas nul (fig. 8C, EX3). On a représenté les salves de porteuses comme s'additionnant au signal d'antenne SA1 mais ces salves peuvent également annuler le signal d'antenne SA1 quand les champs magnétiques FLD1 et FLD2 sont en opposition de phase. Dans ce cas, et comme indiqué plus haut, le condensateur de lissage Cs du circuit d'alimentation auxiliaire (fig. 5A, 5B, 5C) doit présenter une capacité suffisante pour assurer la fourniture de la tension Vccr pendant l'envoi des salves de la porteuse.

Il apparaîtra clairement à l'homme de l'art qu'un lecteur à couplage inductif selon l'invention est susceptible de diverses variantes de réalisation. Notamment, bien que les exemples de réalisation décrits du circuit APS soient de type non symétrique et prélèvent de l'énergie électrique entre l'un des deux points C, D et la masse, le circuit APS peut également être de structure symétrique à point milieu référencé à la masse et être relié aux deux bornes C, D de la bobine d'antenne L1.

L'homme de l'art notera également que la présence des circuits passe bas FLTa, FLTb dans le circuit d'antenne peut avoir une influence sur le choix du point de prélèvement de l'énergie dans le circuit d'antenne. Ainsi, sur la figure 6, les références G et H désignent deux autres points ou noeuds du circuit d'antenne. Le point G est situé entre le filtre FLTa et le condensateur C1a et correspondrait à une borne d'entrée du circuit d'antenne si celui-ci était dépourvu du filtre FLTa. Le point H est situé entre le filtre FLTb et le condensateur C1b et correspondrait à l'autre borne d'entrée du circuit d'antenne si celui-ci était dépourvu du filtre FLTb. Des études complémentaires que l'homme de l'art pourra approfondir montrent que chacun des points G, H peut également être utilisé comme point de prélèvement de l'énergie, notamment lorsque les entrées A, B du circuit d'antenne sont portées à haute impédance (état par défaut) car la présence des filtres passe-bas augmente l'impédance du circuit d'antenne vu depuis ces points G, H.

De façon générale, le point de plus haute impédance selon l'invention n'est pas nécessairement le point où le circuit d'antenne présente la plus haute impédance. Le point de plus haute impédance est un point distinct des bornes d'entrée A, B du circuit d'antenne offrant une impédance plus élevée que celle qu'offrent les bornes d'entrée A, B lorsque l'état par défaut (0 ou HZ) leur est appliqué. A titre d'exemple numérique, si l'impédance d'un circuit d'antenne vu depuis les bornes d'entrée A, B est de l'ordre de 10 Ω, l'impédance du même circuit d'antenne vue depuis les bornes C, D de la bobine sera de l'ordre de 1 KΩ et l'impédance du même circuit d'antenne vu depuis les points intermédiaires précités G, H sera de l'ordre de 100Ω. Ainsi, bien que les bornes C, D (ou la borne E, en tant que point diviseur de tension) forment les meilleurs points de prélèvement de l'énergie électrique, celle-ci pourrait également être prélevée sur les points G, H qui offrent une impédance supérieure aux 10Ω présents sur les bornes A, B.

## Revendications

1. Procédé pour fournir une tension d'alimentation électrique (Vccr) à un premier lecteur (RD1) de circuit intégré sans contact se trouvant dans un mode de fonctionnement passif, en présence d'un champ magnétique alternatif externe (FLD2) émis par un second lecteur (RD2) se trouvant dans un mode de fonctionnement actif et avec lequel le premier lecteur échange des données, le premier lecteur comprenant un circuit d'antenne (ACT, ACT') comportant au moins une borne d'entrée (A, B), au moins un condensateur (C1a, C1b, C2a, C2b) et une bobine d'antenne (L1) présentant deux bornes d'extrémité (C, D), le circuit d'antenne étant sensiblement accordé sur une fréquence de travail (F0) d'un mode de fonctionnement actif du lecteur et présentant, vu depuis sa borne d'entrée (A, B) et à la fréquence de travail (F0), une première impédance,
**caractérisé en ce qu'**il comprend
- une étape consistant à prélever dans le circuit d'antenne (ACT, ACT') du premier lecteur une tension alternative (Vab, Vcd) induite dans le circuit d'antenne par le champ magnétique externe (FLD2) émis par le second lecteur, et une étape consistant à redresser la tension alternative (Vab, Vcd) pour fournir une tension d'alimentation auxiliaire (Vccr) de manière à réceptionner par couplage inductif une partie de l'énergie émise par le second lecteur,
- appliquer à la borne d'entrée (A, B) du circuit d'antenne (ACT, ACT') un signal de contrôle (SX1) présentant par défaut un potentiel électrique (0, HZ) tel que le circuit d'antenne (ACT, ACT') présente un point de plus haute impédance (C, D, E, G, H) où son impédance est supérieure à la première impédance, et
- prélever la tension alternative (Vcd) au point de plus haute impédance (C, D, E, G, H) sans passer par la borne d'entrée (A, B).

2. Procédé selon la revendication 1, dans lequel la tension alternative (Vcd) est prélevée sur au moins une borne (C, D, E) de la bobine d'antenne (L1).

3. Procédé selon l'une des revendications 1 et 2, dans lequel la tension alternative (Vcd) est redressée sans écrêtage de la tension alternative induite (Vcd).

4. Procédé selon l'une des revendications 1 à 3, dans lequel la tension alternative (Vcd) est prélevée sur l'une des bornes d'extrémité (C, D) de la bobine.

5. Procédé selon l'une des revendications 1 à 3, dans lequel la tension alternative (Vcd') est prélevée sur une borne (E) de la bobine d'antenne ne se trouvant pas à l'extrémité de la bobine et formant un point diviseur de la tension alternative induite (Vcd).

6. Procédé selon l'une des revendications 1 à 5, dans lequel la tension d'alimentation auxiliaire (Vccr) est fournie pendant une phase de réception de données du lecteur en mode de fonctionnement passif.

7. Procédé selon la revendication 6, dans lequel la tension d'alimentation auxiliaire (Vccr) est également fournie pendant une phase d'émission de données du lecteur en mode de fonctionnement passif.

8. Procédé selon l'une des revendications 1 à 7, appliqué à un lecteur comprenant une ligne d'alimentation électrique interne (IPSL) reliée à une source d'alimentation principale (MPS), fournissant une tension d'alimentation principale (Vcce), comprenant l'injection de la tension d'alimentation auxiliaire (Vccr) dans la ligne d'alimentation interne et le blocage de la tension d'alimentation principale (Vcce) lorsque la tension d'alimentation auxiliaire (Vccr) est injectée dans la ligne d'alimentation interne.

9. Procédé selon l'une des revendications 1 à 8, dans lequel le potentiel électrique par défaut du signal de contrôle (SX1) est :
- le potentiel haute impédance (HZ), ou
- le potentiel 0, correspondant au potentiel de masse du lecteur.

10. Procédé selon l'une des revendications 1 à 9, comprenant une étape consistant à faire basculer le signal de contrôle (SX1) dans un second potentiel électrique en sus du potentiel électrique par défaut, afin de provoquer une modification de l'impédance du circuit d'antenne (ACT, ACT'), provoquer une modulation de charge dans la bobine d'antenne (L2) d'un autre lecteur (RD2) et émettre des données en mode passif au moyen du circuit d'antenne.

11. Procédé selon la revendication 10, dans lequel le signal de contrôle (SX1) en mode passif présente l'une des combinaisons d'états suivantes:
1) par défaut, le potentiel 0, et le potentiel haute impédance (HZ) pour simuler une modulation de charge,
2) par défaut, le potentiel haute impédance (HZ), et le potentiel 0 pour simuler une modulation de charge,
3) par défaut, le potentiel 0, et une tension continue (Vcc) pour simuler une modulation de charge,
4) par défaut, le potentiel haute impédance (HZ), et une tension continue (Vcc) pour simuler une modulation de charge,
5) par défaut, le potentiel 0, et un signal électrique oscillant (CFO) pour simuler une modulation de charge,
6) par défaut le potentiel haute impédance (HZ) et un signal électrique oscillant (CFO) pour simuler une modulation de charge.

12. Lecteur à couplage inductif (RD1) présentant un mode de fonctionnement actif et un mode de fonctionnement passif et comprenant :
- un circuit d'antenne (ACT, ACT') sensiblement accordé sur une fréquence de travail (F0) du mode de fonctionnement actif du lecteur, comportant au moins une borne d'entrée (A, B), au moins un condensateur (C1a, C1b, C2a, C2b), et une bobine d'antenne (L1) ayant deux bornes d'extrémité (C, D), le condensateur et la bobine étant choisis de manière que le circuit d'antenne soit sensiblement accordé sur la fréquence de travail (F0) et présente, à la fréquence de travail (FO) et vu depuis sa borne d'entrée (A, B), une première impédance,
- un circuit émetteur (EMCT1) pour appliquer à la borne d'entrée (A, B) du circuit d'antenne (ACT, ACT'), lorsque le lecteur (RD1) est dans le mode de fonctionnement actif, un signal d'excitation (SX1) oscillant à la fréquence de travail (F0), de manière que la bobine d'antenne (L1) émette un champ magnétique, et moduler le signal d'excitation pour envoyer des données (DTx),
**caractérisé en ce qu'**il comprend un circuit d'alimentation auxiliaire (APS, APS1, APS2, APS3) pour réceptionner par couplage inductif, lorsque le lecteur est dans le mode de fonctionnement passif, une partie de l'énergie émise par un autre lecteur (RD2) se trouvant dans le mode de fonctionnement actif avec lequel il échange des données, le circuit d'alimentation auxiliaire étant relié au circuit d'antenne (ACT, ACT') et agencé pour fournir une tension d'alimentation auxiliaire (Vccr) du lecteur (RD1) à partir d'une tension alternative (Vab, Vcd) induite dans le circuit d'antenne (ACT, ACT, L1) par un champ magnétique externe (FLD2) émis par l'autre lecteur (RD2),
et comprenant un circuit (EMCT1) pour appliquer à la borne d'entrée (A, B) du circuit d'antenne (ACT, ACT'), dans le mode de fonctionnement passif, un signal de contrôle (SX1) présentant par défaut un potentiel électrique (0, HZ) tel que le circuit d'antenne (ACT, ACT') présente un point de plus haute impédance (C, D, E, G, H) où son impédance est supérieure à la première impédance, et dans lequel le circuit d'alimentation auxiliaire (APS, APS1, APS2, APS3) est relié au point de plus haute impédance (C, D, E, G, H) sans passer par la borne d'entrée (A, B) du circuit d'antenne.

13. Lecteur selon la revendication 12, dans lequel le circuit d'alimentation auxiliaire (APS, APS1, APS2, APS3) est relié à au moins une borne (C, D, E) de la bobine d'antenne (L1).

14. Lecteur selon l'une des revendications 12 et 13, dans lequel le circuit d'alimentation auxiliaire (APS2) comprend un étage d'entrée sans diode d'écrêtage de la tension alternative induite (Vcd).

15. Lecteur selon l'une des revendications 12 à 14, dans lequel le circuit d'alimentation auxiliaire (APS, APS1, APS2, APS3) est connecté à l'une des bornes d'extrémité (C, D) de la bobine.

16. Lecteur selon l'une des revendications 12 à 14, dans lequel le circuit d'alimentation auxiliaire (APS, APS1, APS2, APS3) est connecté à une borne (E) de la bobine ne se trouvant pas à l'extrémité de la bobine et formant un point diviseur de la tension alternative induite (Vcd).

17. Lecteur selon l'une des revendications 12 à 16, dans lequel le circuit d'alimentation auxiliaire (APS, APS1, APS2, APS3) comprend au moins une diode de redressement de la tension alternative (Vcd) et un condensateur de filtrage passe-bas (Cs) de la tension redressée.

18. Lecteur selon l'une des revendications 12 à 17, dans lequel le circuit d'alimentation auxiliaire (APS, APS1, APS2, APS3) fournit la tension d'alimentation auxiliaire (Vccr) pendant une phase de réception de données en mode de fonctionnement passif.

19. Lecteur selon la revendication 18, dans lequel le circuit d'alimentation auxiliaire (APS, APS1, APS2, APS3) fournit également la tension d'alimentation auxiliaire (Vccr) pendant une phase d'émission de données en mode de fonctionnement passif.

20. Lecteur selon l'une des revendications 12 à 19, comprenant une ligne d'alimentation électrique interne (IPSL) reliée d'une part à une source d'alimentation principale (MPS) et d'autre part au circuit d'alimentation auxiliaire (APS, APS1, APS2, APS3).

21. Lecteur selon la revendication 20, dans lequel la ligne d'alimentation interne est reliée à la source d'alimentation principale (MPS) et au circuit d'alimentation auxiliaire (APS, APS1, APS2, APS3) par l'intermédiaire d'un circuit qui bloque une tension (Vcc) issue de la source d'alimentation principale (MPS) lorsque la tension d'alimentation auxiliaire (Vccr) est présente.

22. Lecteur selon l'une des revendications 12 à 21, dans lequel le potentiel électrique par défaut du signal de contrôle (SX1) est:
- le potentiel haute impédance (HZ), ou
- le potentiel 0, correspondant au potentiel de masse du lecteur.

23. Lecteur selon l'une des revendications 12 à 22, comprenant un circuit (EMCT1) pour porter le signal de contrôle (SX1) dans un second potentiel électrique en sus du potentiel électrique par défaut, afin de provoquer une modification de l'impédance du circuit d'antenne (ACT, ACT') à la fréquence de travail et d'envoyer des données (DTx) en mode de fonctionnement passif.

24. Lecteur selon la revendication 23, dans lequel le signal de contrôle (SX1) en mode passif présente l'une des combinaisons d'états suivantes:
1) par défaut, le potentiel 0, et le potentiel haute impédance (HZ) pour simuler une modulation de charge,
2) par défaut, le potentiel haute impédance (HZ), et le potentiel 0 pour simuler une modulation de charge,
3) par défaut, le potentiel 0, et une tension continue (Vcc) pour simuler une modulation de charge,
4) par défaut, le potentiel haute impédance (HZ), et une tension continue (Vcc) pour simuler une modulation de charge,
5) par défaut, le potentiel 0, et un signal électrique oscillant (CFO) pour simuler une modulation de charge,
6) par défaut le potentiel haute impédance (HZ) et un signal électrique oscillant (CFO) pour simuler une modulation de charge.

25. Lecteur selon l'une des revendications 12 à 24, dans lequel le circuit émetteur (EMCT1) fournit le signal de contrôle (SX1) appliqué à la borne d'entrée (A, B) du circuit d'antenne (ACT, ACT') dans le mode de fonctionnement passif.

26. Lecteur selon les revendications 12 et 23, dans lequel le signal de contrôle (SX1) est porté au second potentiel électrique par le circuit émetteur (EMCT1).

27. Appareil électronique portable comprenant des moyens de traitement de données et une batterie rechargeable (MPS), notamment téléphone mobile ou assistant numérique personnel, **caractérisé en ce qu'**il comprend un lecteur (RD1) selon l'une des revendications 12 à 26.

28. Appareil électronique portable selon la revendication 27, dans lequel le lecteur (RD1) dans le mode de fonctionnement actif est alimenté par la batterie (MPS) du dispositif portable, et est auto-alimenté par le circuit d'alimentation auxiliaire (APS, APS1, APS2, APS3) dans le mode de fonctionnement passif.

## Patentansprüche

1. Verfahren zum Bereitstellen einer elektrischen Versorgungsspannung (Vccr) an ein erstes Lesegerät (RD1) zum Lesen einer kontaktlosen integrierten Schaltung, das sich bei Vorhandensein eines externen magnetischen Wechselfeldes (FLD2) in einem passiven Funktionsmodus befindet, das von einem zweiten sich in einem aktiven Funktionsmodus befindenden Lesegerät (RD2) ausgesandt wird, mit dem das erste Lesegerät Daten austauscht, wobei das erste Lesegerät eine Antennenschaltung (ACT, ACT') umfasst, die mindestens einen Eingangsanschluss (A, B), mindestens einen Kondensator (C1a, C1b, C2a, C2b) und eine Antennenspule (L1) mit zwei Endanschlüssen (C, D) umfasst, wobei die Antennenschaltung im Wesentlichen auf eine Betriebsfrequenz (F0) eines aktiven Funktionsmodus des Lesegeräts abgestimmt ist und, von ihrem Eingangsanschluss (A, B) aus gesehen und bei der Betriebsfrequenz (F0), eine erste Impedanz aufweist,
**dadurch gekennzeichnet, dass** es Schritte umfasst, die darin bestehen,
- in der Antennenschaltung (ACT, ACT') des ersten Lesegeräts eine Wechselspannung (Vab, Vcd) abzugreifen, die mittels des externen von dem zweiten Lesegerät ausgesandten Magnetfelds (FLD2) in die Antennenschaltung induziert wird und einen Schritt, der darin besteht, die Wechselspannung (Vab, Vcd) gleichzurichten, um eine Hilfsversorgungsspannung (Vccr) bereitzustellen, so dass ein Teil der von dem zweiten Lesegerät ausgesandten Energie durch induktive Kopplung empfangen wird,
- an den Eingangsanschluss (A, B) der Antennenschaltung (ACT, ACT') ein Steuersignal (SX1) anzulegen, das als Defaultwert ein elektrisches Potential (0, HZ) aufweist, so dass die Antennenschaltung (ACT, ACT') einen Punkt mit einer höheren Impedanz (C, D, E, G, H) aufweist, an dem die Impedanz höher als die erste Impedanz ist, und
- die Wechselspannung (Vcd) am Punkt höherer Impedanz (C, D, E, G, H) abgegriffen wird, ohne den Eingangsanschluss (A, B) zu passieren.

2. Verfahren nach Anspruch 1, bei dem die Wechselspannung (Vcd) von mindestens einem Anschluss (C, D, E) der Antennenspule (L1) abgegriffen wird.

3. Verfahren nach einem der Ansprüche 1 und 2, bei dem die Wechselspannung (Vcd) ohne Begrenzung der induzierten Wechselspannung (Vcd) gleichgerichtet wird.

4. Verfahren nach einem der Ansprüche 1 bis 3, bei dem die Wechselspannung (Vcd) von einem der Endanschlüsse (C, D) der Spule abgegriffen wird.

5. Verfahren nach einem der Ansprüche 1 bis 3, bei dem die Wechselspannung (Vcd') an einem Anschluss (E) der Antennenspule abgegriffen wird, der sich nicht am Spulenende befindet und der einen Teilerpunkt der induzierten Wechselspannung (Vcd) darstellt.

6. Verfahren nach einem der Ansprüche 1 bis 5, bei dem die Hilfsversorgungsspannung (Vccr) während einer Phase des Datenempfangs des Lesegeräts im passiven Funktionsmodus bereitgestellt wird.

7. Verfahren nach Anspruch 6, bei dem die Hilfsversorgungsspannung (Vccr) auch während einer Phase der Datensendung des Lesegeräts im passiven Funktionsmodus bereitgestellt wird.

8. Verfahren nach einem der Ansprüche 1 bis 7, bei einem Lesegerät angewendet, das eine interne elektrische Versorgungsleitung (IPSL) umfasst, welche an eine Hauptversorgungsquelle (MPS) angeschlossen ist und eine Hauptversorgungsspannung (Vcce) bereitstellt, und ferner die Bereitstellung der Hilfsversorgungsspannung (Vccr) in die interne Versorgungsleitung und die Blockierung der Hauptversorgungsspannung (Vcce) umfasst, wenn die Hilfsversorgungsspannung (Vccr) in die interne Versorgungsleitung eingespeist wird.

9. Verfahren nach einem der Ansprüche 1 bis 8, bei dem das elektrische Defaultpotential des Steuersignals (SX1):
- das hochohmige Potential (HZ) ist, oder
- das Potential 0 ist, in Übereinstimmung mit dem Massepotential des Lesegeräts.

10. Verfahren nach einem der Ansprüche 1 bis 9, umfassend einen Schritt, der darin besteht, das Steuersignal (SX1), zusätzlich zu dem elektrischen Defaultpotential, in ein zweites elektrisches Potential umzuschalten, um eine Modifikation der Impedanz der Antennenschaltung (ACT, ACT') zu bewirken, um in der Antennenspule (L2) eines anderen Lesegeräts (RD2) eine Lastmodulation zu bewirken, und Daten im Passivmodus mittels der Antennenschaltung auszusenden.

11. Verfahren nach Anspruch 10, bei dem das Steuersignal (SX1) im Passivmodus eine der folgenden Zustandskombinationen aufweist:
1) als Defaultwert das Potential 0 und das hochohmige Potential (HZ), um eine Lastmodulation zu simulieren,
2) als Defaultwert das hochohmige Potential (HZ) und das Potential 0, um eine Lastmodulation zu simulieren,
3) als Defaultwert das Potential 0 und eine Gleichspannung (Vcc), um eine Lastmodulation zu simulieren,
4) als Defaultwert das hochohmige Potential (HZ) und eine Gleichspannung (Vcc), um eine Lastmodulation zu simulieren,
5) als Defaultwert standardmäßig das Potential 0 und ein oszillierendes elektrisches Signal (CF0), um eine Lastmodulation zu simulieren,
6) als Defaultwert das hochohmige Potential (HZ) und ein oszillierndes elektrisches Signal (CF0), um eine Lastmodulation zu simulieren.

12. Lesegerät mit induktiver Kopplung (RD1), das einen aktiven Funktionsmodus und einen passiven Funktionsmodus aufweist, umfassend:
- eine Antennenschaltung (ACT, ACT'), die im Wesentlichen auf eine Betriebsfrequenz (F0) des aktiven Funktionsmodus des Lesegeräts abgestimmt ist, umfassend mindestens einen Eingangsanschluss (A, B), mindestens einen Kondensator (C1a, C1b, C2a, C2b), und eine Antennenspule (L1) mit zwei Endanschlüssen (C, D), wobei der Kondensator und die Spule so ausgewählt sind, dass die Antennenschaltung im Wesentlichen auf die Betriebsfrequenz (F0) abgestimmt ist und, bei der Betriebsfrequenz (F0) und von seinem Eingangsanschluss (A, B) aus gesehen, eine erste Impedanz aufweist;
- eine Senderschaltung (EMCT1), um am Eingangsanschluss (A, B) der Antennenschaltung (ACT, ACT'), wenn sich das Lesegerät (RD1) im aktiven Funktionsmodus befindet, ein oszillierendes Erregungssignal (SX1) mit der Betriebsfrequenz (F0) anzulegen, so dass die Antennenspule (L1) ein Magnetfeld aussendet, und das Erregungssignal zu modulieren, um Daten (DTx) zu senden,
**dadurch gekennzeichnet, dass** es eine Hilfsversorgungsschaltung (APS, APS1, APS2, APS3) umfasst, um durch induktive Kopplung, wenn das Lesegerät im passiven Funktionsmodus ist, einen Teil der Energie, die von einem anderen sich in dem aktiven Funktionsmodus befindenden Lesegerät (RD2), mit dem es Daten austauscht, ausgesandt wird, zu empfangen, wobei die Hilfsversorgungsschaltung mit der Antennenschaltung (ACT, ACT') verbunden ist, und eingerichtet ist, um eine Hilfsversorgungsspannung (Vccr) dem Lesegeräts (RD1) aus einer Wechselspannung (Vab, Vcd), die in die Antennenschaltung (ACT, ACT', L1) durch ein externes, von dem anderen Lesegerät (RD2) ausgesandtes Magnetfeld (FLD2) induziert wird, bereitzustellen und umfassend eine Schaltung (EMCT1), um an den Eingangsanschluss (A, B) der Antennenschaltung (ACT, ACT') in dem passiven Funktionsmodus ein Steuersignals (SX1) anzulegen, das ein elektrisches Potential (0, HZ) als Defaultwert aufweist, so dass die Antennenschaltung (ACT, ACT') einen Punkt mit höherer Impedanz (C, D, E, G, H) aufweist, an dem die Impedanz höher als die erste Impedanz ist, und wobei die Hilfsversorgungsschaltung (APS, APS1, APS2, APS3) mit dem Punkt mit der höheren Impedanz (C, D, E, G, H) verbunden ist, ohne den Eingangsanschluss (A, B) der Antennenschaltung zu passieren.

13. Lesegerät gemäß Anspruch 12, wobei die Hilfsversorgungsschaltung (APS, APS1, APS2, APS3) mit mindestens einem Anschluss (C, D, E) der Antennenspule (L1) verbunden ist.

14. Lesegerät gemäß einem der Ansprüche 12 und 13, wobei die Hilfsversorgungsschaltung (APS2) eine Eingangsstufe ohne Diode zur Begrenzung der induzierten Wechselspannung (Vcd) umfasst.

15. Lesegerät gemäß einem der Ansprüche 12 bis 14, wobei die Hilfsversorgungsschaltung (APS, APS1, APS2, APS3) mit einem der Endanschlüsse (C, D) der Spule verbunden ist.

16. Lesegerät gemäß einem der Ansprüche 12 bis 14, wobei die Hilfsversorgungsschaltung (APS, APS1, APS2, APS3) mit einem Anschluss (E) der Antennenspule verbunden ist, welcher sich nicht am Ende der Spule befindet und einen Teilerpunkt der induzierten Wechselspannung (Vcd) bildet.

17. Lesegerät gemäß einem der Ansprüche 12 bis 16, wobei die Hilfsversorgungsschaltung (APS, APS1, APS2, APS3) mindestens eine Diode zur Gleichrichtung der Wechselspannung (Vcd) und einen Kondensator (Cs) zur Tiefpassfilterung der gleichgerichteten Spannung umfasst.

18. Lesegerät gemäß einem der Ansprüche 12 bis 17, wobei die Hilfsversorgungsschaltung (APS, APS1, APS2, APS3) die Hilfsversorgungsspannung (Vccr) während einer Phase des Datenempfangs im passiven Funktionsmodus bereitstellt.

19. Lesegerät gemäß Anspruch 18, wobei die Hilfsversorgungsschaltung (APS, APS1, APS2, APS3) die Hilfsversorgungsspannung (Vccr) auch während einer Phase der Datensendung im passiven Funktionsmodus bereitstellt.

20. Lesegerät gemäß einem der Ansprüche 12 bis 19, umfassend eine interne elektrische Versorgungsleitung (IPSL), die einerseits mit einer Hauptversorgungsquelle (MPS) und andererseits mit der Hilfsversorgungsschaltung (APS, APS1, APS2, APS3) verbunden ist.

21. Lesegerät gemäß Anspruch 20, wobei die interne Versorgungsleitung mit der Hauptversorgungsquelle (MPS) und mit der Hilfsversorgungsschaltung (APS, APS1, APS2, APS3) mittels einer Schaltung verbunden ist, die eine Spannung (Vcc) blockiert, welche von der Hauptversorgungsquelle (MPS) ausgegeben wird, wenn die Hilfsversorgungsspannung (Vccr) vorhanden ist.

22. Lesegerät gemäß einem der Ansprüche 12 bis 21, bei dem das elektrische Defaultpotential des Steuersignals (SX1):
- das hochohmige Potential oder
- das Potential 0 in Übereinstimmung mit dem Potential der Masse des Lesegeräts ist.

23. Lesegerät gemäß einem der Ansprüche 12 bis 22, umfassend eine Schaltung (EMCT1), um das Steuersignal (SX1) auf ein zweites elektrisches Potential umzuschalten, und zwar zusätzlich zum elektrischen Defaultpotential, um eine Modifikation der Impedanz der Antennenschaltung (ACT, ACT') bei der Betriebsfrequenz zu bewirken und Daten (DTx) im passiven Funktionsmodus zu übermitteln.

24. Lesegerät gemäß Anspruch 23, wobei das Steuersignal (SX1) im Passivmodus eine der folgenden Zustandskombinationen aufweist:
1) als Defaultwert das Potential 0 und das hochohmige Potential, um eine Lastmodulation zu simulieren;
2) als Defaultwert das hochohmige Potential und das Potential 0, um eine Lastmodulation zu simulieren;
3) als Defaultwert das Potential 0 und eine Gleichspannung (Vcc), um eine Lastmodulation zu simulieren;
4) als Defaultwert das hochohmige Potential und eine Gleichspannung (Vcc), um eine Lastmodulation zu simulieren;
5) als Defaultwert das Potential 0 und ein oszillierendes elektrisches Signal (CF0), um eine Lastmodulation zu simulieren;
6) als Defaultwert das hochohmige Potential und ein oszillierendes elektrisches Signal (CF0), um eine Lastmodulation zu simulieren.

25. Lesegerät gemäß einem der Ansprüche 12 bis 24, wobei die Senderschaltung (EMCT1) das Steuersignal (SX1) bereitstellt, welches am Eingangsanschluss (A, B) der Antennenschaltung (ACT, ACT') im passiven Funktionsmodus angelegt wird.

26. Lesegerät gemäß den Ansprüchen 12 und 23, wobei das Steuersignal (SX1) über die Sendeschaltung (EMCT1) auf das zweite elektrische Potential umgeschaltet wird.

27. Tragbare elektronische Vorrichtung, welche Mittel zur Verarbeitung von Daten und eine aufladbare Batterie (MPS) umfasst, insbesondere ein Mobiltelefon oder ein persönlicher digitaler Assistent (PDA), **dadurch gekennzeichnet, dass** sie ein Lesegerät (RD1) gemäß einem der Ansprüche 12 bis 26 umfasst.

28. Tragbare elektronische Vorrichtung gemäß Anspruch 27, wobei das Lesegerät (RD1) im aktiven Funktionsmodus durch die Batterie (MPS) der tragbaren Vorrichtung gespeist und im passiven Funktionsmodus durch die Hilfsversorgungsschaltung (APS, APS1, APS2, APS3) eigenversorgt wird.

## Claims

1. A method for supplying a power supply voltage (Vccr) to a first contactless integrated circuit reader (RD1) that is in a passive operating mode, in the presence of an external alternating magnetic field (FLD2) emitted by a second reader (RD2) that is in an active operating mode and with which the first reader exchanges data, the first reader comprising an antenna circuit (ACT, ACT') comprising at least one input terminal (A, B), at least one capacitor (C1a, C1b, C2a, C2b) and an antenna coil (L1) having two end terminals (C, D), the antenna circuit being substantially tuned to a working frequency (F0) of an active operating mode of the reader and having, seen from its input terminal (A, B) and at the working frequency (F0), a first impedance,
**characterized in that** it comprises
- a step of taking off in the antenna circuit (ACT, ACT') of the first reader an alternating voltage (Vab, Vcd) induced in the antenna circuit by the external magnetic field (FLD2) emitted by the second reader, and a step of rectifying the alternating voltage (Vab, Vcd) to supply an auxiliary supply voltage (Vccr) so as to receive by inductive coupling a portion of the energy emitted by the second reader.
- applying to the input terminal (A, B) of the antenna circuit (ACT, ACT') a control signal (SX1) having an electric potential (0, HZ) by default such that the antenna circuit (ACT, ACT') has a higher impedance point (C, D, E, G, H) at which its impedance is higher than the first impedance, and
- taking off the alternating voltage (Vcd) at the higher impedance point (C, D, E, G, H) without going through the input terminal (A, B).

2. Method according to claim 1, wherein the alternating voltage (Vcd) is taken off on at least one terminal (C, D, E) of the antenna coil (L1).

3. Method according to one of claims 1 and 2, wherein the alternating voltage (Vcd) is rectified without clipping the induced alternating voltage (Vcd).

4. Method according to one of claims 1 to 3, wherein the alternating voltage (Vcd) is taken off on one of the end terminals (C, D) of the coil.

5. Method according to one of claims 1 to 3, wherein the alternating voltage (Vcd') is taken off on a terminal (E) of the antenna coil that is not at the end of the coil and which forms a dividing point of the induced alternating voltage (Vcd).

6. Method according to one of claims 1 to 5, wherein the auxiliary supply voltage (Vccr) is supplied during a data receiving phase of the reader in passive operating mode.

7. Method according to claim 6, wherein the auxiliary supply voltage (Vccr) is also supplied during a data sending phase of the reader in passive operating mode.

8. Method according to one of claims 1 to 7, applied to a reader comprising an internal power supply line (IPSL) coupled to a main supply source (MPS), supplying a main supply voltage (Vcce), comprising the steps of injecting the auxiliary supply voltage (Vccr) into the internal supply line and blocking the main supply voltage (Vcce) when the auxiliary supply voltage (Vccr) is injected into the internal supply line.

9. Method according to one of claims 1 to 8, wherein the default electric potential of the control signal (SX1) is:
- the high impedance potential (HZ), or
- the 0 potential, corresponding to the ground potential of the reader.

10. Method according to one of claims 1 to 9, comprising a step of switching the control signal (SX1) into a second electric potential in addition to the default electric potential, so as to cause a modification to the impedance of the antenna circuit (ACT, ACT'), to cause a load modulation in the antenna coil (L2) of another reader (RD2) and to send data in passive mode using the antenna circuit.

11. Method according to claim 10, wherein the control signal (SX1) in passive mode has one of the following combinations of states:
1) by default, the 0 potential, and the high impedance potential (HZ) to simulate a load modulation,
2) by default, the high impedance potential (HZ), and the 0 potential to simulate a load modulation,
3) by default, the 0 potential, and a direct voltage (Vcc) to simulate a load modulation,
4) by default, the high impedance potential (HZ), and a direct voltage (Vcc) to simulate a load modulation,
5) by default, the 0 potential, and an oscillating electric signal (CFO) to simulate a load modulation,
6) by default the high impedance potential (HZ) and an oscillating electric signal (CFO) to simulate a load modulation.

12. An inductive coupling reader (RD1) having an active operating mode and a passive operating mode and comprising:
- an antenna circuit (ACT, ACT') substantially tuned to a working frequency (F0) of the active operating mode of the reader, comprising at least one input terminal (A, B), at least one capacitor (C1a, C1b, C2a, C2b), and an antenna coil (L1) having two end terminals (C, D), the capacitor and the coil being chosen so that the antenna circuit is substantially tuned to the working frequency (F0) and has, at the working frequency (F0) and seen from its input terminal (A, B), a first impedance,
- an emitter circuit (EMCT1) for applying to the input terminal (A, B) of the antenna circuit (ACT, ACT'), when the reader (RD1) is in the active operating mode, an excitation signal (SX1) oscillating at the working frequency (F0), so that the antenna coil (L1) sends a magnetic field, and for modulating the excitation signal to send data (DTx),
**characterized in that** it comprises an auxiliary supply circuit (APS, APS1, APS2, APS3) for receiving by inductive coupling, when the reader is in the passive operating mode, a portion of the energy emitted by another reader (RD2) that is in the active operating mode with which it exchanges data, the auxiliary supply circuit being coupled to the antenna circuit (ACT, ACT') and arranged for supplying an auxiliary supply voltage (Vccr) of the reader (RD1) using an alternating voltage (Vab, Vcd) induced in the antenna circuit (ACT, ACT', L1) by an external magnetic field (FLD2) emitted by the other reader (RD2).
and comprising a circuit (EMCT1) for applying to the input terminal (A, B) of the antenna circuit (ACT, ACT'), in the passive operating mode, a control signal (SX1) having an electric potential (0, HZ) by default such that the antenna circuit (ACT, ACT') has a higher impedance point (C, D, E, G, H) at which its impedance is higher than the first impedance, and in which the auxiliary supply circuit (APS, APS1, APS2, APS3) is coupled to the higher impedance point (C, D, E, G, H) without going through the input terminal (A, B) of the antenna circuit.

13. Reader according to claim 12, wherein the auxiliary supply circuit (APS, APS1, APS2, APS3) is coupled to at least one terminal (C, D, E) of the antenna coil (L1).

14. Reader according to one of claims 12 and 13, wherein the auxiliary supply circuit (APS2) comprises an input stage without a clipper diode for clipping the induced alternating voltage (Vcd).

15. Reader according to one of claims 12 to 14, wherein the auxiliary supply circuit (APS, APS1, APS2, APS3) is connected to one of the end terminals (C, D) of the coil.

16. Reader according to one of claims 12 to 14, wherein the auxiliary supply circuit (APS, APS1, APS2, APS3) is connected to a terminal (E) of the coil that is not at the end of the coil and which forms a dividing point of the induced alternating voltage (Vcd).

17. Reader according to one of claims 12 to 16, wherein the auxiliary supply circuit (APS, APS1, APS2, APS3) comprises at least one diode for rectifying the alternating voltage (Vcd) and a capacitor for low-pass filtering (Cs) the rectified voltage.

18. Reader according to one of claims 12 to 17, wherein the auxiliary supply circuit (APS, APS1, APS2, APS3) provides the auxiliary supply voltage (Vccr) during a phase of receiving data in passive operating mode.

19. Reader according to claim 18, wherein the auxiliary supply circuit (APS, APS1, APS2, APS3) also supplies the auxiliary supply voltage (Vccr) during a phase of sending data in passive operating mode.

20. Reader according to one of claims 12 to 19, comprising an internal power supply line (IPSL) coupled on the one hand to a main supply source (MPS) and on the other hand to the auxiliary supply circuit (APS, APS1, APS2, APS3).

21. Reader according to claim 20, wherein the internal supply line is coupled to the main supply source (MPS) and to the auxiliary supply circuit (APS, APS1, APS2, APS3) through a circuit that blocks a voltage (Vcc) coming from the main supply source (MPS) when the auxiliary supply voltage (Vccr) is present.

22. Reader according to one of claims 12 to 21, wherein the default electric potential of the control signal (SX1) is:
- the high impedance potential (HZ), or
- the 0 potential, corresponding to the ground potential of the reader.

23. Reader according to one of claims 12 to 22, comprising a circuit (EMCT1) for taking the control signal (SX1) into a second electric potential in addition to the default electric potential, in order to cause a modification to the impedance of the antenna circuit (ACT, ACT') at the working frequency and to send data (DTx) in passive operating mode.

24. Reader according to claim 23, wherein the control signal (SX1) in passive mode has one of the following combinations of states:
1) by default, the 0 potential, and the high impedance potential (HZ) to simulate a load modulation,
2) by default, the high impedance potential (HZ), and the 0 potential to simulate a load modulation,
3) by default, the 0 potential, and a direct voltage (Vcc) to simulate a load modulation,
4) by default, the high impedance potential (HZ), and a direct voltage (Vcc) to simulate a load modulation,
5) by default, the 0 potential, and an oscillating electric signal (CFO) to simulate a load modulation,
6) by default the high impedance potential (HZ) and an oscillating electric signal (CFO) to simulate a load modulation.

25. Reader according to one of claims 12 to 24, wherein the emitter circuit (EMCT1) supplies the control signal (SX1) applied to the input terminal (A, B) of the antenna circuit (ACT, ACT') in the passive operating mode.

26. Reader according to claims 12 and 23, wherein the control signal (SX1) is taken to the second electric potential by the emitter circuit (EMCT1).

27. A portable electronic device comprising means for processing data and a rechargeable battery (MPS), particularly a mobile telephone or personal digital assistant, **characterized in that** it comprises a reader (RD1) according to one of claims 12 to 26.

28. Portable electronic device according to claim 27, wherein the reader (RD1) in the active operating mode is powered by the battery (MPS) of the portable device, and is self-powered by the auxiliary supply circuit (APS, APS1, APS2, APS3) in the passive operating mode.
